(19) Europäisches Patentamt
European Patent Office
Office européen des brevets

(11) EP 4 648 378 A1

(12) EUROPEAN PATENT APPLICATION
published in accordance with Art. 153(4) EPC

(43) Date of publication:
12.11.2025 Bulletin 2025/46

(51) International Patent Classification (IPC):
H04L 45/00 (2022.01)

(21) Application number: 24744114.0

(22) Date of filing: 08.01.2024

(52) Cooperative Patent Classification (CPC):
H04L 45/00; H04L 45/028; H04L 45/24

(86) International application number:
PCT/CN2024/071210

(87) International publication number:
WO 2024/152938 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.01.2023 CN 202310101548

(71) Applicant: Huawei Technologies Co., Ltd.
Shenzhen, Guangdong 518129 (CN)

(72) Inventors:
• XU, Jie
  Shenzhen, Guangdong 518129 (CN)
• LIU, Shuo
  Shenzhen, Guangdong 518129 (CN)
• WANG, Qiaoling
  Shenzhen, Guangdong 518129 (CN)

(74) Representative: Gill Jennings & Every LLP
The Broadgate Tower
20 Primrose Street
London EC2A 2ES (GB)

(54) **METHOD FOR FORWARDING IN-NETWORK COMPUTING MESSAGE, FORWARDING NODE AND COMPUTER STORAGE MEDIUM**

(57) Embodiments of this application disclose an in-network computing packet forwarding method, a forwarding node, and a computer storage medium, and belong to the field of communication technologies. In the method, a forwarding node receives a plurality of in-network computing packets; determines an in-network computing identifier of each in-network computing packet; performs, based on the in-network computing identifier of each in-network computing packet, aggregation computing on in-network computing packets that belong to a same in-network computing message in the plurality of in-network computing packets, to obtain at least one aggregated packet; and forwards each aggregated packet by using a hash routing algorithm based on an in-network computing identifier corresponding to each aggregated packet. To be specific, after aggregating in-network computing packets, the forwarding node does not need to perform forwarding through a path that is statically configured in advance, but performs hash routing by using an in-network computing identifier. In this way, a path consistency requirement of in-network computing traffic can be met while dynamic routing is implemented, to improve in-network computing packet forwarding flexibility.

FIG. 7

## Description

This application claims priority to Chinese Patent Application No. 202310101548.4, filed on January 19, 2023 and entitled "IN-NETWORK COMPUTING PACKET FORWARDING METHOD, FORWARDING NODE, AND COMPUTER STORAGE MEDIUM", which is incorporated herein by reference in its entirety.

## TECHNICAL FIELD

Embodiments of this application relate to the field of communication technologies, and in particular, to an in-network computing packet forwarding method, a forwarding node, and a computer storage medium.

## BACKGROUND

In a distributed computing scenario, a plurality of computing nodes communicate with each other to exchange data, to execute a same computing task through the plurality of computing nodes. Further, to improve efficiency of executing the computing task, a part of the computing task may be delivered to a forwarding node between the computing nodes for execution. To be specific, when forwarding data between different computing nodes, the forwarding node further performs computing on the data. This technology is an in-network computing technology. In the in-network computing technology, a specific packet exchanged between two computing nodes may be referred to as an in-network computing packet, and in-network computing packets exchanged between a large number of computing nodes for a same computing task may be collectively referred to as an in-network computing message.

In a related technology, different computing nodes usually exchange data through a plurality of layers of forwarding nodes. In this scenario, after a bottom-layer forwarding node receives an in-network computing packet sent by a computing node and performs aggregation computing, a path for forwarding an aggregated packet is statically configured in advance. This can ensure that different bottom-layer forwarding nodes forward, to a same higher-layer forwarding node, aggregated packets belonging to a same in-network computing message, so that the higher-layer forwarding node continues to perform aggregation computing on different in-network computing packets belonging to the same in-network computing message. In other words, a path consistency feature of the in-network computing technology is met.

In the foregoing mode, when there are a large quantity of computing nodes and a large quantity of forwarding nodes in the distributed computing scenario, static path configuration consumes considerable efforts. In addition, if a network changes, the path needs to be statically configured again. This also consumes lots of efforts. Therefore, this packet forwarding mode has poor flexibility.

## SUMMARY

Embodiments of this application provide an in-network computing packet forwarding method, a forwarding node, and a computer storage medium, to improve packet forwarding flexibility. The technical solutions are as follows.

According to a first aspect, an in-network computing packet forwarding method is provided. In the method, a forwarding node receives a plurality of in-network computing packets. The forwarding node determines an in-network computing identifier of each of the plurality of in-network computing packets, where the in-network computing identifier indicates an in-network computing message to which the corresponding in-network computing packet belongs. The forwarding node performs, based on the in-network computing identifier of each of the plurality of in-network computing packets, aggregation computing on in-network computing packets that belong to a same in-network computing message in the plurality of in-network computing packets, to obtain at least one aggregated packet, where the at least one aggregated packet one-to-one corresponds to at least one in-network computing identifier. The forwarding node forwards, by using a hash routing algorithm, each aggregated packet based on the in-network computing identifier corresponding to each of the at least one aggregated packet.

In this embodiment of this application, after aggregating the in-network computing packets, the forwarding node does not need to perform forwarding through a path that is statically configured in advance, but performs hash routing by using the in-network computing identifier of the in-network computing packet. This can ensure that the in-network computing packets belonging to the same in-network computing message are routed to a same next hop, to be specific, a path consistency requirement of in-network computing traffic can be met while dynamic routing is implemented, to improve in-network computing packet forwarding flexibility.

In addition, because static path configuration is not needed, a routing policy of the forwarding node is transparent to a computing node. This enhances transmission security of an in-network computing flow. Moreover, because the static path configuration is not needed, a centralized management node does not need to be additionally configured to statically configure a path. This simplifies network design. Even if a network subsequently changes, network maintenance costs are low.

With reference to the method according to the first aspect, in a possible implementation, the forwarding node stores an aggregation information mapping relationship, and the aggregation information mapping relationship includes at least one in-network computing identifier and a data flow identifier respectively corresponding to the at least one in-network computing identifier.

In this scenario, an implementation process in which the forwarding node determines the in-network computing identifier of each of the plurality of in-network computing packets may be: for a first in-network computing packet in the plurality of in-network computing packets, determining a data flow identifier corresponding to the first in-network computing packet, to obtain a first data flow identifier, where the first in-network computing packet is any one of the plurality of in-network computing packets; and if the first data flow identifier exists in the aggregation information mapping relationship, obtaining, from the aggregation information mapping relationship, an in-network computing identifier corresponding to the first data flow identifier, to obtain a first in-network computing identifier, and using the first in-network computing identifier as an in-network computing identifier of the first in-network computing packet. Correspondingly, if the first data flow identifier does not exist in the aggregation information mapping relationship, the forwarding node obtains the first data flow identifier and the first in-network computing identifier from a packet header of the first in-network computing packet, and adds a correspondence between the first in-network computing identifier and the first data flow identifier to the aggregation information mapping relationship.

To prevent the in-network computing flow from occupying excessive bandwidth, an initial packet of an in-network computing flow carries an in-network computing identifier, and a non-initial packet does not need to carry the in-network computing identifier. In this scenario, when receiving an initial packet of each in-network computing flow, the forwarding node may obtain, from the initial packet, a data flow identifier of the in-network computing flow and an in-network computing identifier to which the in-network computing flow belongs, and then record, in the aggregation information mapping relationship, a mapping relationship between the obtained data flow identifier and in-network computing identifier, so that when a non-initial packet is subsequently received, an in-network computing identifier of the non-initial packet is determined in the aggregation information mapping relationship.

With reference to the method according to the first aspect, in a possible implementation, an implementation process in which the forwarding node performs, based on the in-network computing identifier of each of the plurality of in-network computing packets, aggregation computing on the in-network computing packets that belong to the same in-network computing message in the plurality of in-network computing packets may be: binding the first in-network computing packet to the first data flow identifier in the aggregation information mapping relationship; and performing aggregation computing on in-network computing packets respectively bound to a plurality of data flow identifiers corresponding to the first in-network computing identifier that are in the aggregation information mapping relationship, to obtain an aggregated packet corresponding to the first in-network computing identifier.

Because the aggregation information relationship stores the data flow identifier corresponding to each in-network computing identifier, the aggregation computing may be performed on in-network computing packets respectively bound to data flow identifiers corresponding to a same in-network computing identifier that are in the aggregation information mapping relationship, to improve processing efficiency of the forwarding node.

With reference to the method according to the first aspect, in a possible implementation, an implementation process of performing aggregation computing on the in-network computing packets respectively bound to the plurality of data flow identifiers corresponding to the first in-network computing identifier that are in the aggregation information mapping relationship may be: for the in-network computing packets respectively bound to the plurality of data flow identifiers corresponding to the first in-network computing identifier, determining a packet sequence number of each bound in-network computing packet; determining an offset of each bound in-network computing packet based on an initial-packet sequence number corresponding to each of the plurality of data flow identifiers corresponding to the first in-network computing identifier and the packet sequence number of each bound in-network computing packet; and performing, based on the offset of each bound in-network computing packet, aggregation computing on in-network computing packets with a same offset.

In the foregoing manner, for different in-network computing flows that belong to a same in-network computing message, the aggregation computing may be performed on in-network computing packets with a same offset in the different in-network computing flows.

With reference to the method according to the first aspect, in a possible implementation, the data flow identifier includes the initial-packet sequence number, a communication operation tag, and a data flow length.

In the foregoing manner, the foregoing fields may be obtained through extension as the data flow identifier in the in-network computing packet, to improve application flexibility of this embodiment of this application.

With reference to the method according to the first aspect, in a possible implementation, the in-network computing identifier includes a communication group identifier and an in-network computing message identifier, the communication group identifier indicates a communication group in which in-network computing is currently performed, and the in-network computing message identifier indicates an in-network computing message transmitted in the communication group.

Considering that in-network computing messages transmitted in different communication groups may have a same in-network computing message identifier, in this embodiment of this application, a combination of the in-network computing message identifier and the communication group identifier may be used as the in-network computing identifier, to uniquely identify an in-network computing message.

With reference to the method according to the first aspect, in a possible implementation, the plurality of in-network computing packets are remote direct memory access over converged Ethernet RoCE packets, the forwarding node stores at least one remote direct memory access RDMA connection identifier, the RDMA connection identifier indicates an RDMA connection between a first computing node and a second computing node, and the first computing node is a computing node accessed by the forwarding node.

In this scenario, before the forwarding node determines the in-network computing identifier of each of the plurality of in-network computing packets, for a second in-network computing packet in the plurality of in-network computing packets, the forwarding node obtains an RDMA connection identifier carried in the second in-network computing packet, where the second in-network computing packet is any one of the plurality of in-network computing packets. If the RDMA connection identifier carried in the second in-network computing packet exists in the stored at least one RDMA connection identifier, the forwarding node performs an operation of determining an in-network computing identifier corresponding to the second in-network computing packet.

In this embodiment of this application, the in-network computing flow may be transmitted through remote direct memory access over converged Ethernet (RDMA over Converged Ethernet, RoCE) instead of unreliable UDP, to improve transmission reliability of the in-network flow. In this scenario, whether the in-network computing packet is an uplink in-network computing packet may be determined based on information carried in the in-network computing packet, and the method provided in this embodiment of this application is performed on a premise that it is determined that the in-network computing packet is the uplink in-network computing packet. This improves the processing efficiency of the forwarding node.

With reference to the method according to the first aspect, in a possible implementation, the RDMA connection identifier includes a source Internet protocol IP address, a source port identifier, and a destination queue number QPN.

The foregoing fields may uniquely identify an RDMA connection. This improves flexibility of this embodiment of this application.

With reference to the method according to the first aspect, in a possible implementation, in the method, the forwarding node receives a notification message from an uplink communication link. The forwarding node obtains a target RDMA connection identifier carried in the notification message, where the notification message is for notifying that an RDMA connection indicated by the target RDMA connection identifier is for transmission of an in-network computing packet. The forwarding node stores the target RDMA connection identifier.

In the foregoing manner, during network initialization, when an RDMA connection is created between an uplink computing node of the forwarding node and another computing node, the forwarding node may automatically store at least one RDMA connection identifier based on the created RDMA connection.

With reference to the method according to the first aspect, in a possible implementation, an implementation process in which the forwarding node obtains the target RDMA connection identifier carried in the notification message may be: The forwarding node obtains type information carried in the notification message. If the type information indicates that the notification message is a notification message for an in-network computing packet, the forwarding node performs the operation of obtaining a target RDMA connection identifier carried in the notification message.

The notification message is a control layer packet. To distinguish a control layer packet and another control packet in embodiments of this application, the type information may be carried in the notification message, and the type information indicates whether the notification message is the notification message for the in-network computing packet, to improve the processing efficiency of the forwarding node.

With reference to the method according to the first aspect, in a possible implementation, an implementation process in which the forwarding node forwards, by using the hash routing algorithm, each aggregated packet based on the in-network computing identifier corresponding to each of the at least one aggregated packet may be: determining a first hash factor for a first aggregated packet in the at least one aggregated packet, where the first hash factor includes an in-network computing identifier corresponding to the first aggregated packet, and the first aggregated packet is any one of the at least one aggregated packet; determining a first routing identifier by using the hash routing algorithm based on the first hash factor, where the first routing identifier indicates a forwarding path; and forwarding the first aggregated packet based on the first routing identifier.

When the in-network computing identifier corresponding to the aggregated packet is used as a hash factor for routing, for two different aggregated packets obtained by two different bottom-layer forwarding nodes through aggregation, regardless of where in-network computing packets corresponding to the aggregated packets are from, the two bottom-layer forwarding nodes forward the aggregated packets to a same next hop according to the method provided in this embodiment of this application provided that the different aggregated packets correspond to a same in-network identifier, to ensure path consistency of in-network computing flows.

With reference to the method according to the first aspect, in a possible implementation, the first hash factor further includes a protocol version number and a destination port number that are carried in an in-network computing packet corresponding to the first aggregated packet.

The protocol version number and the destination port number may indicate a communication protocol that the in-network computing packet currently complies with. When the hash factor includes the in-network computing identifier, the protocol version number, and the destination port number, packets that comply with a same communication protocol and belong to a same in-network computing message may be forwarded to a same forwarding node.

With reference to the method according to the first aspect, in a possible implementation, an implementation process in which the forwarding node forwards, by using the hash routing algorithm, each aggregated packet based on the in-network computing identifier corresponding to each of the at least one aggregated packet may be: for a second aggregated packet in the at least one aggregated packet, forwarding the second aggregated packet by using the hash routing algorithm based on a forwarding table and an in-network computing identifier that corresponds to the second aggregated packet, where the second aggregated packet is any one of the at least one aggregated packet. The forwarding table includes a plurality of target forwarding entries, next hops in the plurality of target forwarding entries are the same, a total quantity of the plurality of target forwarding entries indicates an in-network computing capability of the corresponding next hop, and the plurality of target forwarding entries are scattered in the forwarding table.

In the forwarding table, the quantity of forwarding entries including the same next hop is set based on the in-network computing capability of the next hop. Therefore, a quantity of forwarding entries including a next hop that is a high-configuration forwarding node is large. This can improve a probability of selecting these forwarding entries, and correspondingly increase traffic forwarded to the high-configuration forwarding node, to fully utilize an in-network computing capability of the high-configuration forwarding node.

In addition, if the target forwarding entries including the same next hop are centrally placed in a same location in the forwarding table, assuming that there are a large quantity of target forwarding entries, a probability that the forwarding node selects another forwarding entry is extremely low. Consequently, network congestion easily occurs on the next hop corresponding to the target forwarding entries, and zero load occurs on a next hop corresponding to the another forwarding entry. Therefore, in this embodiment of this application, the plurality of target entries including the same next hop are scattered in the forwarding table, to ensure a load amount of the next hop included in the another forwarding entry.

According to a second aspect, a forwarding node is provided. The forwarding node has a function of implementing behavior in the in-network computing packet forwarding method in the first aspect. The forwarding node includes at least one module, and the at least one module is configured to implement the in-network computing packet forwarding method provided in the first aspect.

According to a third aspect, a forwarding node is provided. A structure of the forwarding node includes a processor and a memory. The memory is configured to store a program that supports the forwarding node in performing the in-network computing packet forwarding method provided in the first aspect, and store data for implementing the in-network computing packet forwarding method provided in the first aspect. The processor is configured to execute the program stored in the memory. An operation apparatus of the storage device may further include a communication bus, and the communication bus is configured to establish a connection between the processor and the memory.

According to a fourth aspect, a computer-readable storage medium is provided. The computer-readable storage medium stores instructions. When the instructions are run on a computer, the computer is enabled to perform the in-network computing packet forwarding method according to the first aspect.

According to a fifth aspect, a computer program product including instructions is provided. When the computer program product runs on a computer, the computer is enabled to perform the in-network computing packet forwarding method according to the first aspect.

Technical effects achieved in the second aspect, the third aspect, the fourth aspect, and the fifth aspect are similar to those achieved by corresponding technical means in the first aspect. Details are not described herein again.

**BRIEF DESCRIPTION OF DRAWINGS**

FIG. 1 is a diagram of scenarios of a path consistency feature according to an embodiment of this application;
FIG. 2 is another diagram of scenarios of a path consistency feature according to an embodiment of this application;
FIG. 3 is a diagram of a scenario of different sources and different destinations according to an embodiment of this application;
FIG. 4 is a diagram of two multipath routing solutions according to an embodiment of this application;
FIG. 5 is a diagram of an architecture of a communication system according to an embodiment of this application;
FIG. 6 is a diagram of an architecture of another communication system according to an embodiment of this application;
FIG. 7 is a flowchart of an in-network computing packet forwarding method according to an embodiment of this application;
FIG. 8 is a diagram of a format of a RoCEv2 packet according to an embodiment of this application;
FIG. 9 is a diagram of a format of some fields of a notification message according to an embodiment of this application;
FIG. 10 is a diagram of a format of some fields of an in-network computing packet according to an embodiment of this application;
FIG. 11 is a diagram of a weighting process according to an embodiment of this application;
FIG. 12 is a diagram of a smoothing process according to an embodiment of this application;
FIG. 13 is a schematic flowchart of generating a weighted and smooth routing table according to an embodiment of this application;
FIG. 14 is a schematic flowchart of forwarding an in-network computing packet according to an embodiment of this application;
FIG. 15 is a diagram of an architecture of a forwarding node according to an embodiment of this application;
FIG. 16 is a diagram of a structure of a computer device according to an embodiment of this application; and
FIG. 17 is a diagram of a forwarding node being an apparatus according to an embodiment of this application.

## DESCRIPTION OF EMBODIMENTS

To make objectives, technical solutions, and advantages of embodiments of this application clearer, the following further describes implementations of this application in detail with reference to the accompanying drawings.

Before embodiments of this application are described, application scenarios of embodiments of this application are first described.

As data sizes increase, a computing capability of a single computing node cannot meet a computing requirement of large-size data. Therefore, distributed computing in which a plurality of computing nodes perform collaborative computing for a same computing task becomes a trend. For example, model training is performed for a same artificial intelligence (artificial intelligence, AI) task by using a computing capability provided by a shared cluster or a cloud.

An execution time period of the computing task can be significantly shortened through the distributed computing. However, after the computing task is allocated to the plurality of computing nodes, the plurality of computing nodes further need to communicate with each other to exchange data in a process in which the plurality of computing nodes execute the computing task. From another perspective, a time period of communication between the plurality of computing nodes increases the execution time period of the computing task. Consequently, the time period of communication between the computing nodes in the distributed computing becomes a bottleneck problem of the distributed computing.

In an in-network computing technology, a part of the computing task is offloaded to a forwarding node in a network. For example, the forwarding node may be a switch having a computing capability. Because a part of computing of the computing task is completed by the forwarding node, load of a central processing unit (central processing unit, CPU) on the computing node is reduced, and aggregation computing can be implemented by using the in-network computing technology, to be specific, the forwarding node compresses a plurality of copies of data from different computing nodes into one copy. This reduces occupied network bandwidth resources and shortens a data transmission time period in the network. For example, a high performance computing (high performance computing, HPC) task involves data aggregation computing between a plurality of computing nodes, and a parameter aggregation task also needs to be executed between a plurality of computing nodes in AI training. No matter which type of task is executed, a task completion time period can be shortened by using the in-network computing technology.

In addition, traffic of a computing task implemented by using the in-network computing technology (referred to as an in-network computing flow for short below) has the following features:

(1) Path consistency feature:

In-network computing flows that belong to a same in-network computing message and that are on different computing nodes are aggregated to a same forwarding node to complete aggregation computing. For example, when hierarchical in-network computing is performed, to be specific, when a plurality of layers of forwarding nodes are deployed between different computing nodes, different bottom-layer forwarding nodes need to aggregate, to a same next-layer forwarding node, different in-network computing flows belonging to a same in-network computing message, so that the next-layer forwarding node can perform aggregation computing on the different in-network computing flows belonging to the same in-network computing message.

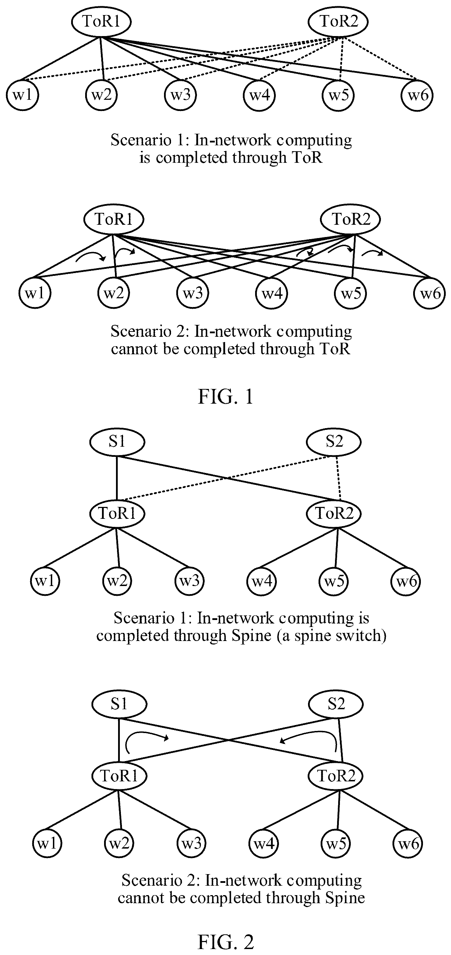

FIG. 1 and FIG. 2 each are a diagram of scenarios of the path consistency feature according to an embodiment of this application. The scenarios shown in FIG. 1 include two top of rack (top of rack, ToR) switches and six computing nodes. In FIG. 1, the two ToR switches are respectively denoted as ToR1 and ToR2, and the six computing nodes are respectively denoted as w1 to w6. FIG. 1 includes a scenario 1 and a scenario 2. The scenario 1 is a scenario in which in-network computing can be completed through ToR, and the scenario 2 is a scenario in which in-network computing cannot be completed through ToR.

As shown in FIG. 1, in the scenario 1 in which the in-network computing can be completed through ToR, when executing a same computing task, w1 to w6 send all in-network computing packets for the computing task (namely, in-network computing packets that belong to a same in-network computing message) to ToR1 through communication links shown by solid lines, and ToR1 may perform aggregation computing on the in-network computing packets that are sent by w1 to w6 and that belong to the same in-network computing message. Alternatively, w1 to w6 send all in-network computing packets that belong to a same in-network computing message to ToR2 through communication links shown by dashed lines, and ToR2 may perform aggregation computing on the in-network computing packets that are sent by w1 to w6 and that belong to the same in-network computing message.

As shown in FIG. 1, in the scenario 2 in which the in-network computing cannot be completed through ToR, when w1 to w6 execute a same computing task, in-network computing packets exchanged between w1 and w2 and between w2 and w3 are forwarded by ToR1, but in-network computing packets exchanged between w3 and w4, between w4 and w5, between w5 and w6, and between w6 and w1 are forwarded by ToR2. In this case, aggregation computing on all in-network computing packets that belong to a same in-network computing message cannot be performed by a same forwarding node.

The scenarios shown in FIG. 2 include two top of rack (top of rack, ToR) switches, two spine (Spine) switches, and six computing nodes. In FIG. 2, the two ToR switches are respectively denoted as ToR1 and ToR2, the two spine switches are respectively denoted as S1 and S2, and the six computing nodes are respectively denoted as w1 to w6. FIG. 2 also includes a scenario 1 and a scenario 2. The scenario 1 is a scenario in which in-network computing can be completed through the spine switch, and the scenario 2 is a scenario in which in-network computing cannot be completed through the spine switch.

As shown in FIG. 2, in the scenario 1 in which the in-network computing can be completed through the spine switch, when w1 to w6 execute a same computing task, any one of w1 to w3 sends all in-network computing packets for the computing task (namely, in-network computing packets that belong to a same in-network computing message) to ToR1, and any one of w4 to w6 sends all in-network computing packets that belong to the same in-network computing message to ToR2. In this case, ToR1 and ToR2 forward all the in-network computing packets that belong to the in-network computing message to S1 through links shown by solid lines in FIG. 2, and S1 completes aggregation computing on the in-network computing packets that are sent by w1 to w6 and that belong to the same in-network computing message.

As shown in FIG. 2, in the scenario 2 in which the in-network computing cannot be completed through the spine switch, when w1 to w6 execute a same computing task, in-network computing packets exchanged between w1 and w2 and between w2 and w3 are forwarded by ToR1 and S1, an in-network computing packet exchanged between w3 and w4 is forwarded by ToR1, S1, and ToR2, in-network computing packets exchanged between w4 and w5 and between w5 and w6 are forwarded by ToR2 and S2, and an in-network computing packet exchanged between w6 and w1 is forwarded by ToR2, S2, and ToR1. In this case, aggregation computing on all the in-network computing packets that are sent by w1 to w6 and that belong to a same in-network computing message cannot be performed by a same spine switch.

(2) A traffic size is limited by computing resources of an in-network computing switch (namely, the forwarding node).

Because the computing resources (such as a register) of the forwarding node need to be occupied for a computing task to complete computing, a size of an in-network computing flow that can be accommodated on a link is limited by an amount of computing resources of the forwarding node.

Based on the foregoing two features, a routing path of an in-network computing flow is usually static and fixed, in other words, a forwarding path of the in-network computing flow is statically configured. However, when both the in-network computing flow and conventional traffic exist in a network (to be specific, the forwarding node only forwards packets but does not perform aggregation computing), this static configuration mode has the following problems:

(1) If the path of the in-network computing flow is not a light-loaded network link, a network transmission time period of the in-network computing flow increases, and a completion time period of the computing task increases.

(2) Because a size of the in-network computing flow is usually large, blocking impact of the in-network computing flow on traditional traffic on a same link cannot be ignored. Therefore, a transmission time period of the traditional traffic and a completion time period of a traditional computing task increase.

In addition, in some scenarios, for example, a cloud usually includes a plurality of tenants for AI training (namely, an AI task). For small-size traffic generated by the AI task and traffic generated by a computing-intensive AI task, a task completion time period is not significantly shortened even if the in-network computing technology is used for the traffic. Therefore, the traffic is still forwarded in a conventional manner, and is correspondingly referred to as conventional traffic. However, for large-size traffic generated by a communication-intensive AI task, a task completion time period is significantly shortened if the in-network computing technology is used for the traffic. Therefore, the in-network computing technology may be used for the traffic, and the traffic is correspondingly referred to as an in-network computing flow. In this scenario, as load of traditional traffic on a same link increases, a transmission delay of the in-network computing flow increases. As a result, finally, an actual completion time period of the in-network computing flow does not decrease but increases.

Based on this, in some scenarios, load balancing needs to be performed for the in-network computing flow. Currently, a conventional transmission control protocol/Internet protocol (transmission control protocol/Internet protocol, TCP/IP) network usually uses a hash (Hash)-based equal cost multi path (equal cost multi path, ECMP) route distribution technology. Specifically, when a specific port of a switch receives a packet, a protocol version number, a source IP address, a source port number, a destination IP address, and a destination port number in packet header information of the packet are extracted to form a 5-tuple, the 5-tuple is used as a hash factor (Hash factor) to perform hash calculation to obtain a hash key (Hash Key), a modulo operation (Modulo-N, Mod-N) is performed by using the hash key, and a next-hop forwarding route is determined based on a result of the modulo operation.

However, because the path consistency feature of in-network computing flows cannot be met through routing performed based on the current 5-tuple, ECMP is not suitable for multipath forwarding of the in-network computing flow. For example, when a plurality of layers of forwarding nodes are deployed between different computing nodes, a plurality of bottom-layer forwarding nodes need to route packets of different in-network computing flows that belong to a same in-network computing message to a same higher-layer forwarding node to complete aggregation computing. However, 5-tuples carried in packets of in-network computing flows on different bottom-layer forwarding nodes are different, and belong to different sources and different destinations. Therefore, next-hop forwarding routes selected through the hash calculation are also different, forwarding to the same higher-layer forwarding node cannot be implemented, and correspondingly, the aggregation computing cannot be completed by the higher-layer forwarding node.

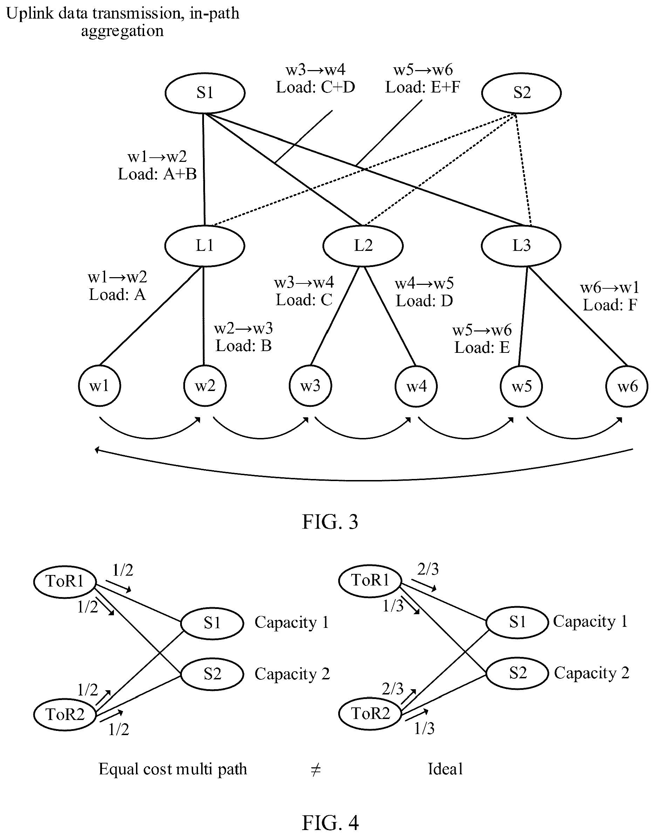

FIG. 3 is a diagram of a scenario of different sources and different destinations according to an embodiment of this application. In FIG. 3, w represents a computing node, and w1 to w6 represent a group that executes a same computing task. L represents a bottom-layer forwarding node, S represents a higher-layer forwarding node, load represents a quantity of packets transmitted on a link, and w1→w2 represents that a current data packet is sent from w1 (a source) to w2 (a destination). For other similar concepts, refer to the explanations, and examples are not enumerated herein one by one.

Packets forwarded by L1 and L2 are used as an example for description. As shown in FIG. 3, packets received by L1 include a packet from w1→w2 and a packet from w2→w3, and packets received by L2 include a packet from w3→w4 and a packet from w4→w5. After the packets sent by w1 and w2 are aggregated by L1, and when L1 forwards an aggregated packet to a next-hop route, an IP header carried in the packet may be w1→w2. After the packets sent by w3 and w4 are aggregated by L2, and when L2 forwards an aggregated packet to a next-hop route, an IP header carried in the packet may be w3→w4. In this case, if the ECMP technology is used, because the packets sent by L1 and L2 to a higher-layer forwarding node belong to different sources and different destinations, the next-hop route used after L1 forwards the aggregated packet is different from the next-hop route used after L2 forwards the aggregated packet. In this way, the aggregated packet from L1 and the aggregated packet from L2 cannot be sent to a same next-hop route for further aggregation.

Based on this, currently, a plurality of paths are usually statically configured to respectively forward in-network computing flows that belong to different in-network computing messages to specified paths in the plurality of paths. For example, in a PANAMA technology (a type of in-network computing technology), different paths may be distinguished by using different IP multicast addresses. Because the path is statically configured, a path consistency feature of in-network computing flows that belong to a same in-network computing message is ensured while multipath forwarding is performed on the in-network computing flows that belong to the different in-network computing messages.

However, the foregoing static configuration mode has the following disadvantages:

(1) In the PANAMA technology, different paths are distinguished by using the IP multicast addresses. In this case, a computing node side needs to preconfigure an IP multicast address of a related path, to be specific, a routing decision for the in-network computing flow is not transparent to a computing node (an end side). This easily causes the in-network computing flow to be maliciously attacked.

(2) In the foregoing static configuration mode, a centralized management node needs to be additionally configured to statically configure a path, and design is complex. When a quantity of packets in an in-network computing flow that belongs to a specific in-network computing message is large and changes, a path usually needs to be configured again for the in-network computing flow that belongs to the in-network computing message, and configuration costs and maintenance costs are high.

(3) Currently, in the PANAMA technology, packet transmission for the in-network computing flow is performed according to an unreliable layer 4 transport protocol, namely, the user datagram protocol (User Datagram Protocol, UDP). As a result, reliability of the packet transmission for the in-network computing flow is not ensured, and the packet transmission is a best-effort service.

(4) The plurality of paths in the foregoing static configuration mode are a plurality of equal-cost paths. When computing resources of different forwarding nodes impose different limitations on a maximum capacity for in-network computing traffic on a link, in other words, when different forwarding nodes have different in-network computing capabilities, in-network computing performance of a high-configuration forwarding node cannot be fully utilized according to an equal cost multi path method.

FIG. 4 is a diagram of two multipath routing solutions according to an embodiment of this application. A maximum capacity of S1 for an in-network computing flow is twice that of S2 for the in-network computing flow. When the equal cost multi path method is applied, ToR1 and ToR2 both forward 1/2 of an in-network computing flow to S1, and forward the other 1/2 of the in-network computing flow to S2. In this case, traffic received by S1 and S2 is of a same size. However, because the maximum capacity of S1 is twice that of S2, half of the maximum capacity of S1 is wasted.

However, if an unequal cost multi path method is applied, for example, ToR1 and ToR2 both forward 2/3 of an in-network computing flow to S1, and forward the other 1/3 of the in-network computing flow to S2, a size of an in-network computing flow received by S1 is twice a size of an in-network computing flow received by S2. Therefore, an in-network computing capability of S1 can be completely utilized.

Based on the problems that exist in the foregoing static path configuration mode, embodiments of this application provide an in-network computing packet forwarding method. For ease of subsequent understanding, an overall concept of embodiments of this application is first described herein.

(1) In embodiments of this application, a path does not need to be statically configured in advance, but a forwarding node performs hash routing by using an in-network computing identifier of an in-network computing packet. This can ensure that in-network computing packets belonging to a same in-network computing message are routed to a same next hop, to be specific, a path consistency requirement of in-network computing traffic can be met while dynamic routing is implemented. In addition, because static path configuration is not needed, a routing policy of the forwarding node is transparent to a computing node. This enhances transmission security of an in-network computing flow.

(2) Because the static path configuration is not needed, a centralized management node does not need to be additionally configured to statically configure a path. This simplifies network design. Even if a network subsequently changes, network maintenance costs are low.

(3) In embodiments of this application, the in-network computing flow may be transmitted through remote direct memory access over converged Ethernet (RDMA over Converged Ethernet, RoCE) instead of unreliable UDP, to improve transmission reliability of the in-network computing flow.

(4) In embodiments of this application, weighting and smoothing processing may be further performed on a forwarding table. The weighting and smoothing processing is performed on the forwarding table, so that after load balancing is performed by using the forwarding table, an in-network computing flow received by each forwarding node matches an in-network computing capability of the forwarding node as much as possible.

The following describes a communication architecture in embodiments of this application.

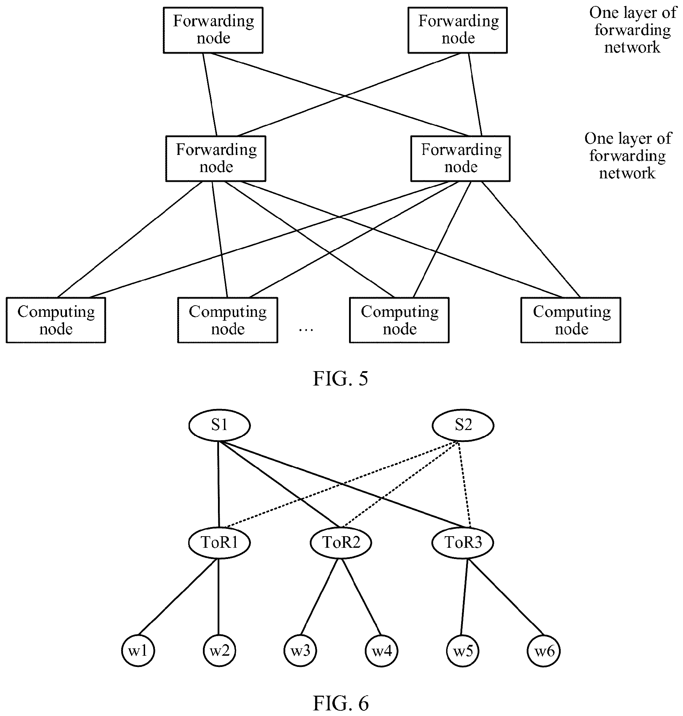

FIG. 5 is a diagram of an architecture of a communication system according to an embodiment of this application. As shown in FIG. 5, the communication system includes a plurality of computing nodes, the plurality of computing nodes exchange data through a plurality of layers of forwarding networks, and each layer of forwarding network includes at least two forwarding nodes, to implement a multipath requirement of in-network computing traffic.

A quantity of layers of forwarding networks is not limited in embodiments of this application. In FIG. 5, two layers of forwarding networks are used as an example for description. A quantity of forwarding nodes and a quantity of computing nodes included in each layer of forwarding network are not limited in embodiments of this application either. An example in which each layer of forwarding network includes two forwarding nodes is used in FIG. 5 for description.

FIG. 6 is a diagram of an architecture of another communication system according to an embodiment of this application. As shown in FIG. 6, the communication system includes, for example, six computing nodes, a first layer of forwarding network, and a second layer of forwarding network. In FIG. 6, the six computing nodes are respectively denoted as w1 to w6. In addition, as shown in FIG. 6, the first layer of forwarding network includes, for example, three top of rack (top of rack, ToR) switches that are respectively denoted as ToR1, ToR2, and ToR3, and the second layer of forwarding network includes, for example, two spine (spine) switches that are respectively denoted as S1 and S2.

Based on the communication system shown in FIG. 5 or FIG. 6, the following describes an in-network computing packet forwarding method provided in embodiments of this application.

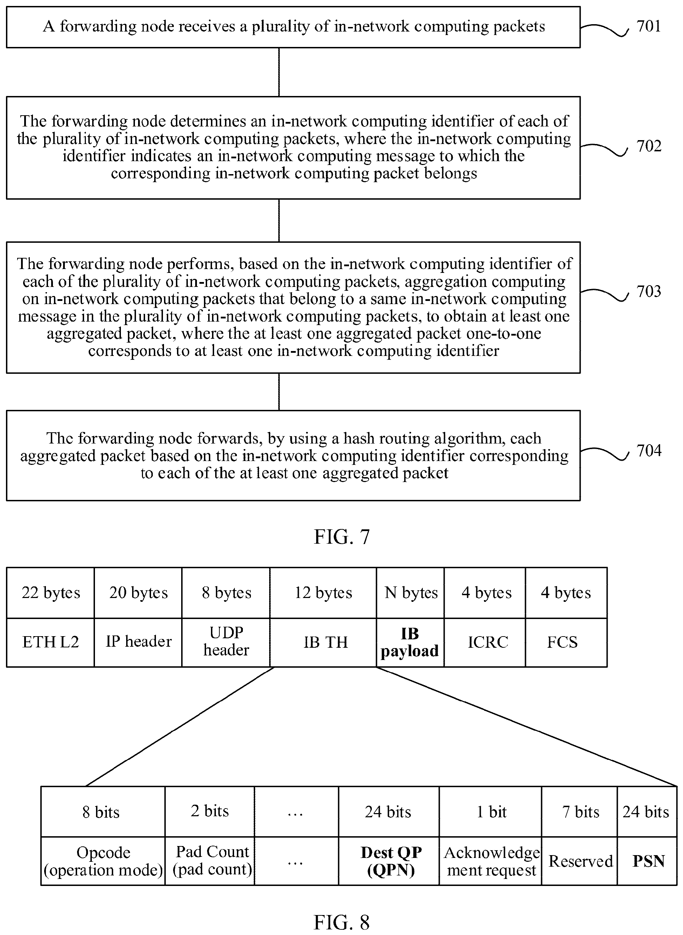

FIG. 7 is a flowchart of an in-network computing packet forwarding method according to an embodiment of this application. As shown in FIG. 7, the method includes the following step 701 to step 704.

Step 701: A forwarding node receives a plurality of in-network computing packets.

The forwarding node may be, for example, a bottom-layer forwarding node in the communication network shown in FIG. 5. For example, the forwarding node may be ToR1, ToR2, or ToR3 in FIG. 6.

In addition, the method provided in this embodiment of this application is applicable to a scenario in which the forwarding node receives an uplink in-network computing packet from a computing node. In a scenario in which the forwarding node receives a downlink result packet from another forwarding node or a scenario in which the forwarding node receives conventional traffic, the forwarding node performs forwarding normally.

The uplink in-network computing packet is an in-network computing packet sent from a computing node side to a higher-layer forwarding node, and the downlink result packet is an in-network computing packet obtained by the higher-layer forwarding node through aggregation and then sent from to the computing node side. As shown in FIG. 6, an in-network computing packet sent on a link from a computing node (any one of w1 to w6) to a ToR switch and then to a spine switch (S1 or S2) is referred to as an uplink in-network computing packet, and an in-network computing packet sent on a link from a spine switch (S1 or S2) to a ToR switch and then to a computing node (any one of w1 to w6) is referred to as a downlink result packet.

In some embodiments, to improve packet transmission reliability, the in-network computing packet may be a remote direct memory access over converged Ethernet (remote direct memory access over converged ethernet, RoCE) packet. In other words, the in-network computing packet is transmitted in a network according to the RoCE protocol.

The RoCE protocol is a remote direct memory access (remote direct memory access, RDMA) over converged Ethernet protocol. The RoCE protocol allows remote hosts to directly access a memory of each other through the network. The following uses RoCE version 2 (RoCEv2) as an example to describe a RoCE protocol-based packet.

RoCEv2 is a network layer protocol. A packet header of a RoCEv2-based packet (namely, a RoCEv2 packet) carries routing information, and the forwarding node may forward the RoCEv2 packet based on the packet header. In view of this, currently, RoCEv2 is widely used in distributed computing applications (such as an HPC application and an AI application). For example, the in-network computing packet provided in this embodiment of this application may be a RoCEv2 packet.

FIG. 8 is a diagram of a format of the RoCEv2 packet according to this embodiment of this application. As shown in FIG. 8, the RoCEv2 packet includes an Ethernet layer 2 (ETH L2) packet header, an IP header, a UDP header, an InfiniBand base transport header (InfiniBand Base Transport Header, IB BTH), an IB payload, a cyclic redundancy check (cyclic redundancy check, CRC), and a frame check sequence (frame check sequence, FCS).

The ETH L2 carries a source media access control (media access control, MAC) address and a destination MAC address. The IP header carries a source IP address and a destination IP address. The UDP header carries a source port number and a destination port number, where the destination port number of the RoCEv2 packet is 4791. The CRC and the FCS respectively correspond to redundancy check and frame check.

The IB TH carries a key field for intelligent traffic analysis. As shown in FIG. 8, the IB TH includes fields such as an operation mode (Opcode), a pad count (Pad Count), a destination queue number (Destination Queue Pair, QPN), and a packet sequence number (Packet Sequence Number, PSN). The operation mode indicates a type of the RoCEv2 packet. For the type of the RoCEv2 packet, refer to a related standard. Details are not described herein. The pad count indicates a quantity of extra bytes that are padded into the IB payload. The QPN identifies a RoCEv2 flow. The PSN identifies a sequence number of the RoCEv2 packet. For example, whether a data packet is lost may be determined by detecting whether PSNs are consecutive.

For other fields in the RoCEv2 packet shown in FIG. 8, refer to definitions in the related standard. Details are not described herein one by one.

When an in-network computing packet is sent according to RoCEv2, the computing node organizes to-be-sent data into a plurality of messages, and then divides, for transmission, each message into a plurality of RDMA packets through an RDMA network card based on a size limitation of the IB payload. The to-be-sent data is an in-network computing flow. For example, the to-be-sent data may be a model parameter or a gradient, for example, a tensor (tensor).

The foregoing uses the RoCEv2 packet as an example for description. Optionally, the in-network computing packet may alternatively comply with a RoCE protocol of another version. Examples are not enumerated herein one by one.

When the in-network computing packet is a RoCE packet, whether the in-network computing packet is an uplink in-network computing packet may be determined based on information carried in the in-network computing packet. In this scenario, the forwarding node stores at least one RDMA connection identifier, each RDMA connection identifier indicates an RDMA connection between a first computing node and a second computing node, and the first computing node is a computing node accessed by the forwarding node. In other words, each RDMA connection identifier indicates an RDMA connection between an uplink computing node of the forwarding node and another computing node.

In this case, for a second in-network computing packet in the plurality of in-network computing packets, the forwarding node may obtain an RDMA connection identifier carried in the second in-network computing packet, where the second in-network computing packet is any one of the plurality of in-network computing packets. If the RDMA connection identifier carried in the second in-network computing packet exists in the stored at least one RDMA connection identifier, it indicates that the second in-network computing packet is an uplink in-network computing packet. In this case, the second in-network computing packet is forwarded according to the method provided in this embodiment of this application.

The RDMA connection identifier may include, for example, the source IP address, a source port identifier (or the source port number), and the QPN. In addition, the at least one RDMA connection identifier may be stored in an aggregation IP mapping relationship. In this scenario, when a source IP address, a source port number, and a QPN in a packet header of the second in-network packet are all recorded in the aggregation IP mapping relationship, it indicates that the second in-network computing packet is sent through an RDMA connection between an uplink computing node and another computing node. Therefore, the second RDMA packet is an uplink in-network computing packet.

Optionally, for example, the RDMA connection identifier may further include more information in the packet header shown in FIG. 8, and examples are not enumerated herein one by one.

In addition, the stored at least one RDMA connection identifier may be generated based on an RDMA connection created between computing nodes during network initialization. In other words, during the network initialization, when an RDMA connection is created between an uplink computing node of the forwarding node and another computing node, the forwarding node may automatically store the at least one RDMA connection identifier based on the created RDMA connection.

Based on this, in some embodiments, the forwarding node receives a notification message from an uplink communication link. The forwarding node obtains a target RDMA connection identifier carried in the notification message, where the notification message is for notifying that an RDMA connection indicated by the target RDMA connection identifier is for transmission of an in-network computing packet. The forwarding node stores the target RDMA connection identifier. For example, the target RDMA connection identifier may be stored in the foregoing aggregation IP mapping relationship.

The notification message is a control layer packet. To distinguish a control layer packet and another control packet in embodiments of this application, type information may be carried in the notification message. The type information indicates whether the notification message is a notification message for an in-network computing packet. In this scenario, when receiving the notification message, the forwarding node may further obtain the type information carried in the notification message. If the type information indicates that the notification message is the notification message for the in-network computing packet, the forwarding node performs the operation of obtaining a target RDMA connection identifier carried in the notification message. Correspondingly, if the type information indicates that the notification message is not the notification message for the in-network computing packet, the operation of obtaining a target RDMA connection identifier carried in the notification message does not need to be performed. In this manner, efficiency of storing the at least one RDMA connection identifier by the forwarding node can be improved.

For example, a specific field in the notification message may be extended, so that the field carries the type information. For example, when a format of the notification message is the RoCEv2 packet shown in FIG. 8, the IB payload field of the RoCEv2 packet may be extended, so that the IB payload field carries the type information.

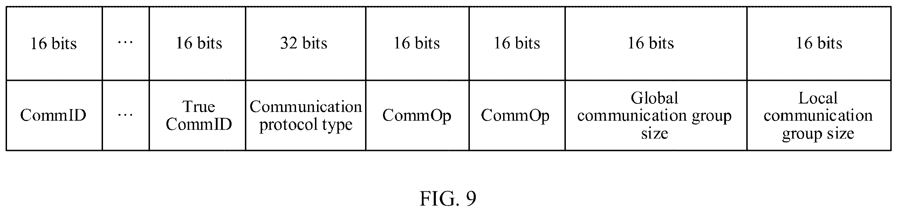

FIG. 9 is a diagram of a format of some fields of the notification message according to this embodiment of this application. The format of the notification message is the RoCEv2 packet shown in FIG. 8, and the IB payload field of the notification message includes information shown in FIG. 9. As shown in FIG. 9, the IB payload field of the notification message includes a communication group identifier (CommID), a true communication group identifier (true CommID), a communication protocol type (Comm Protocol Type), a communication operation type (Comm Op), a global communication group size (Global Group Size), and a local communication group size (Local Group Size).

When the communication group identifier (CommID) == 0x0001/0x0002, it indicates that the notification message is the notification message for the in-network computing packet. The target RDMA connection identifier carried in the notification message may be obtained from another field in FIG. 8.

In this embodiment of this application, the notification message is for notifying an RDMA connection established by the uplink computing node, and the RDMA connection is for transmission of an in-network computing packet. Therefore, the notification message may further carry some information about the in-network computing packet transmitted through the RDMA connection. As shown in FIG. 9, because the communication group identifier (CommID) carries the type information, the notification message further carries the true communication group identifier (true CommID), where the true communication group identifier indicates a true identifier of a communication group in which in-network computing is currently performed.

In addition, as shown in FIG. 9, the notification message further carries the communication protocol type that indicates a type of a currently used protocol. The notification message further carries the communication operation type (Comm Op), and the field indicates an operation type needed by a current operation. The notification message further carries the global communication group size and the local communication group size. The global communication group size indicates a quantity of all computing nodes in the communication group, and the local communication group size indicates a quantity of computing nodes that belong to the communication group and that are in computing nodes accessed by the forwarding node.

In this scenario, two options, namely, the communication group identifier (CommID) and a communication group size, may be further added to the aggregation IP mapping relationship, so that the forwarding node subsequently determines, based on the communication group identifier (CommID) and the communication group size, whether all in-network computing packets on which aggregation computing needs to be performed are received. Related content is described in detail in the following step 703, and details are not described herein.

Table 1 is a diagram of the aggregation IP mapping relationship according to this embodiment of this application. As enumerated in Table 1, the aggregation IP mapping relationship includes options such as a source IP address, a source port identifier (or a source port number), a QPN, the communication group identifier, and the communication group size (Group Size). The source IP address, the source port identifier (or the source port number), and the QPN indicate a unique RDMA connection.

Table 1

| Key (key) | | | | Value (value) |
|---|---|---|---|---|
| Source IP address | Source port number | QPN | Communication group size | Communication group identifier + Index |
| 10.0.1.1 | 1 | 11 | 100 | 1001 + Index 1 |
| 10.0.0.2 | 2 | 6 | 100 | 1002 + Index 2 |

Based on the aggregation IP mapping relationship enumerated in Table 1, when receiving the notification message from the uplink communication link, the forwarding node obtains the source IP address, the source port identifier (or the source port number), and the QPN in the notification message, and uses the three options as an RDMA connection identifier. Then, the communication group identifier (CommID) in the IB payload of the notification message is obtained. If the communication group identifier (CommID) == 0x0001/0x0002, an entry is newly added to the aggregation IP mapping relationship, then the true communication group identifier is obtained, and a mapping relationship between a true communication group and the RDMA connection identifier is added to the newly added entry.

0x0001 and 0x0002 are for distinguishing whether a previous hop of a forwarding path of the notification message is a computing node.

For example, when the communication group identifier (CommID) is 0x0001, it indicates that the previous hop of the forwarding path of the notification message is the computing node. In this case, the forwarding node obtains the local communication group size in the IB payload field of the notification message, and adds the local communication size as the communication group size to the newly added entry. Then, the forwarding node determines whether the local communication group size in the IB payload field of the notification message is less than the global communication group size, in other words, determines whether the local group size is less than the global group size. When the condition is met, it indicates that multi-layer in-network computing needs to be performed currently, in other words, a higher-layer forwarding node exists. Therefore, the forwarding node changes the communication group identifier (CommID) to be 0x0002, and then forwards the notification message to all higher-layer forwarding nodes. When the condition is not met, it indicates that higher-layer in-network computing does not need to be performed currently. In this case, a normal forwarding process is performed, in other words, the forwarding node continues to forward the notification message to another computing node in a downlink direction.

When the forwarding node receives a notification message with a communication group identifier (CommID) as 0x0002, it indicates that a previous hop of a forwarding path of the notification message is another forwarding node, and currently, the forwarding node is a higher-layer forwarding node in the network. Because another notification message sent by another forwarding node for the same communication group may have been received before a current time point, the forwarding node first determines whether an entry including a true communication group identifier in the notification message already exists in the aggregation IP mapping relationship. If the entry including the true communication group identifier in the notification message already exists in the aggregation IP mapping relationship, the forwarding node updates a communication group size in the entry to a local communication group size carried in the notification message plus an original communication group size, in other words, Group size = Local group size + Group size.

Correspondingly, if the entry including the true communication group identifier in the notification message does not exist in the aggregation IP mapping relationship, an entry is newly added to the aggregation IP mapping relationship, and the true communication group identifier and the local communication group size that are carried in the notification message are added to the newly added entry.

Then, the forwarding node determines a communication group size that corresponds to the true communication group identifier in the notification message and that is in the aggregation IP mapping relationship, and determines a value relationship between the communication group size and a global communication group size.

If the communication group size is less than the global communication group size, in other words, the group size < the global group size, it indicates that not notification messages released by all the computing nodes in the communication group are received currently, and there is another forwarding node that is in the current network and that may not complete deploying the aggregation IP mapping relationship. Therefore, the current packet is buffered, and a notification message released by another computing node is waited for. This is to ensure that, when an in-network computing packet is subsequently received, whether the in-network computing packet is an uplink in-network computing packet can be determined in the complete aggregation IP mapping relationship, to avoid incorrect determining. The complete aggregation IP mapping relationship means that RDMA connection identifiers corresponding to the notification messages released by all the uplink computing nodes of the forwarding node are included.

Correspondingly, if the communication group size is equal to the global communication group size, in other words, the group size = the global group size, it indicates that all the forwarding nodes in the network have completed deploying the aggregation IP mapping relationship. Therefore, the notification message with the CommID as 0x0002 is normally forwarded to another computing node.

When neither of the two conditions is met, it indicates that the current notification message is incorrect and may be discarded.

In addition, to facilitate subsequent quotation from the entries in Table 1, as enumerated in Table 1, the entries in the aggregation IP mapping relationship may be stored in a key-value form, and each entry includes a key (key) and a value (value). The key (key) includes the source IP address, the source port identifier (or the source port number), the QPN, and the communication group size (Group Size), and the value (value) includes a communication group identifier and an index that is generated based on the corresponding key.

It should be noted that a manner of storing the aggregation IP mapping relationship is not limited in this embodiment of this application, and examples are not enumerated herein one by one.

The foregoing uses an example in which the computing node releases the notification message to describe how to configure the aggregation IP mapping relationship on the forwarding node. Optionally, the aggregation IP mapping relationship may be statically configured on the forwarding node by a skilled person based on the RDMA connection in the network, or may be generated by a control node based on the RDMA connection in the network and delivered to the forwarding node.

Step 702: The forwarding node determines an in-network computing identifier of each of the plurality of in-network computing packets, where the in-network computing identifier indicates an in-network computing message to which the corresponding in-network computing packet belongs.

In some embodiments, the in-network computing identifier may include a communication group identifier and an in-network computing message identifier, the communication group identifier indicates the communication group in which in-network computing is currently performed, and the in-network computing message identifier indicates an in-network computing message transmitted in the communication group. Considering that in-network computing messages transmitted in different communication groups may have a same in-network computing message identifier, in this embodiment of this application, a combination of the in-network computing message identifier and the communication group identifier may be used as the in-network computing identifier. Optionally, if in-network computing message identifiers of in-network computing messages transmitted in different communication groups are completely different, the in-network computing message identifier may be directly used as the in-network computing identifier in this scenario.

In this embodiment of this application, to ensure path consistency of in-network computing flows by using a dynamic hash routing algorithm, a format of the in-network computing packet may be extended, so that the in-network computing packet carries some indication information. In this way, when receiving the in-network computing packet, the forwarding node may obtain the in-network computing identifier of the in-network computing packet based on the indication information carried in the in-network computing packet, to subsequently perform hash routing by using an in-network computing identifier corresponding to an aggregated packet.

In some embodiments, each in-network computing packet may carry the in-network computing identifier. In this scenario, the forwarding node may directly obtain the in-network computing identifier from a packet header of the in-network computing packet.

Optionally, in some other embodiments, to prevent the in-network computing flow from occupying excessive bandwidth, an initial packet of an in-network computing flow carries an in-network computing identifier, and a non-initial packet does not need to carry the in-network computing identifier. In this scenario, when receiving an initial packet of each in-network computing flow, the forwarding node may obtain, from the initial packet, a data flow identifier of the in-network computing flow and an in-network computing identifier to which the in-network computing flow belongs, and then record, in an aggregation information mapping relationship, a mapping relationship between the obtained data flow identifier and in-network computing identifier. In other words, the forwarding node stores the aggregation information mapping relationship, and the aggregation information mapping relationship includes at least one in-network computing identifier and a data flow identifier respectively corresponding to the at least one in-network computing identifier.

In this scenario, an implementation in which the forwarding node obtains the in-network computing identifier of each in-network computing packet may be: for any one of the plurality of in-network computing packets, determining a data flow identifier of the in-network computing packet, and then searching the aggregation information mapping relationship for an in-network computing identifier corresponding to the data flow identifier. Correspondingly, if the in-network computing identifier corresponding to the data flow identifier is not found in the aggregation information mapping relationship, it indicates that the in-network computing packet is an initial packet of an in-network computing flow. In this case, the in-network computing identifier may be directly obtained from a packet header of the in-network computing packet.

For example, for a first in-network computing packet in the plurality of in-network computing packets, a data flow identifier corresponding to the first in-network computing packet is determined, to obtain a first data flow identifier, where the first in-network computing packet is any one of the plurality of in-network computing packets. If the first data flow identifier exists in the aggregation information mapping relationship, an in-network computing identifier corresponding to the first data flow identifier is obtained from the aggregation information mapping relationship, to obtain a first in-network computing identifier, where the first in-network computing identifier is an in-network computing identifier of the first in-network computing packet. Correspondingly, if the first data flow identifier does not exist in the aggregation information mapping relationship, the first data flow identifier and the first in-network computing identifier are obtained from a packet header of the first in-network computing packet, and a correspondence between the first in-network computing identifier and the first data flow identifier is added to the aggregation information mapping relationship.

For example, the data flow identifier may include a communication operation tag (Tag), a data flow length, and an initial-packet sequence number. For example, the data flow length may be a quantity of packets included in the in-network computing flow, in other words, the data flow length is in packet quantity. The communication operation tag (Tag) indicates an operation that the current computing node sends the in-network computing flow. The initial-packet sequence number indicates a PSN of the initial packet in the in-network computing flow. In the foregoing manner, the foregoing fields may be obtained through extension as the data flow identifier in the in-network computing packet, to improve application flexibility of this embodiment of this application.

In some embodiments, each packet in the in-network computing flow carries the data flow identifier. In this scenario, the forwarding node directly obtains the data flow identifier from the in-network computing packet.

Optionally, in some other embodiments, in the scenario in which the in-network computing packet is the RoCE packet, different in-network computing flows are usually sent through different RDMA connections. In this scenario, a data flow identifier may be carried in an initial packet of an in-network computing flow, and is not carried in a non-initial packet of the in-network computing flow, so that the in-network computing flow does not occupy excessive bandwidth. This improves a transmission speed of the in-network computing flow.

When receiving the initial packet, the forwarding node records a mapping relationship between the data flow identifier, an in-network computing identifier, and an RDMA connection identifier in the aggregation information mapping relationship. When receiving the non-initial packet, the forwarding node determines, based on an RDMA connection identifier carried in the non-initial packet, a data flow identifier corresponding to the non-initial packet and a corresponding in-network computing identifier.

Table 2 enumerates an aggregation information mapping relationship according to this embodiment of this application. As enumerated in Table 2, the aggregation information mapping relationship includes a source IP address, a source port identifier (or a source port number), a QPN, a communication group identifier, a communication operation tag (Tag), an in-network computing message identifier (MsgID), a data flow length (MsgLen), an initial-packet PSN, and the like.

Table 2

| Key (key) | | | | | | | Value (value) |
|---|---|---|---|---|---|---|---|
| Source IP address | Source port number | QPN | Communication group identifier | MsgID | Tag | MsgLen | Initial-packet PSN |
| 10.0.0.1 | 1 | 11 | 1001 | 1 | 100 | 3 | 200 |
| 10.0.0.2 | 2 | 12 | 1002 | 2 | 200 | 5 | 20 |

As enumerated in Table 2, the source IP address, the source port number, and the QPN are used as an RDMA connection identifier to uniquely identify an RDMA connection. The communication group identifier and the MsgID are used as an in-network computing identifier to uniquely identify an in-network computing message. The Tag, the MsgLen, and the initial-packet PSN are used as a data flow identifier to identify a data flow.

Based on the aggregation information mapping relationship enumerated in Table 2, in the scenario in which the forwarding node stores the aggregation IP mapping relationship in step 701, an implementation in which the forwarding node determines the in-network computing identifier of each of the plurality of in-network computing packets may be: For any one of the plurality of in-network computing packets, the forwarding node obtains an RDMA connection identifier carried in the in-network computing packet. If the RDMA connection identifier carried in the in-network computing packet exists in the aggregation IP mapping relationship, it indicates that the in-network computing packet is an uplink in-network computing packet. Then, the aggregation information mapping relationship is searched for a data flow identifier and an in-network computing identifier of the in-network computing packet based on the RDMA connection identifier. If the data flow identifier and the in-network computing identifier that correspond to the RDMA connection identifier are not found in the aggregation information mapping relationship, it indicates that the in-network computing packet is an initial packet of an uplink in-network computing flow. In this case, the data flow identifier and the in-network computing identifier are obtained from a packet header of the in-network computing packet, and the obtained data flow identifier, the obtained in-network computing identifier, and the RDMA connection identifier are added to the aggregation information mapping relationship.

Optionally, in the scenario in which Table 1 is stored in the key-value form, to reduce storage space for Table 2, Table 2 may also be stored in the key-value form, and first three columns in Table 2 are stored in the corresponding form of the communication group identifier + the index in Table 1. In this scenario, Table 2 may be converted into the following Table 3.

In a scenario in which the forwarding node stores Table 1 and Table 3, an implementation in which the forwarding node determines the in-network computing identifier of each of the plurality of in-network computing packets may be: For any one of the plurality of in-network computing packets, the forwarding node obtains an RDMA connection identifier carried in the in-network computing packet. If the RDMA connection identifier carried in the in-network computing packet exists in Table 1, it indicates that the in-network computing packet is an uplink in-network computing packet. Then, an index and a communication group identifier are determined in Table 1, and Table 2 is searched for a corresponding entry based on the index and the communication group identifier. If both a data flow identifier and an in-network computing identifier exist in the corresponding entry, it indicates that the in-network computing packet is a non-initial packet currently. In this case, the data flow identifier and the in-network computing identifier of the in-network computing packet are obtained from Table 3. If neither a data flow identifier nor an in-network computing identifier exists in the corresponding entry, it indicates that the in-network computing packet is an initial packet currently. In this case, the data flow identifier and the in-network computing identifier are obtained from the in-network computing packet, and the obtained data flow identifier and in-network computing identifier are added to the corresponding entry.

Table 3

| Key (key) | | | | Value (value) |
|---|---|---|---|---|
| Communication group identifier + Index | MsgID | Tag | MsgLen | Initial-packet PSN |
| 1001 + Index 1 | 1 | 100 | 3 | 200 |
| Index 2 + 1002 | 2 | 200 | 5 | 20 |

In addition, in Table 3, the initial-packet PSN is stored as a value, to help subsequently perform aggregation computing based on the initial-packet PSN. Related content is described in detail in the following embodiment, and details are not described herein.

The following uses a format of an initial packet of a specific in-network computing flow as an example to describe how to include a data flow identifier and an in-network computing identifier in an in-network computing packet.

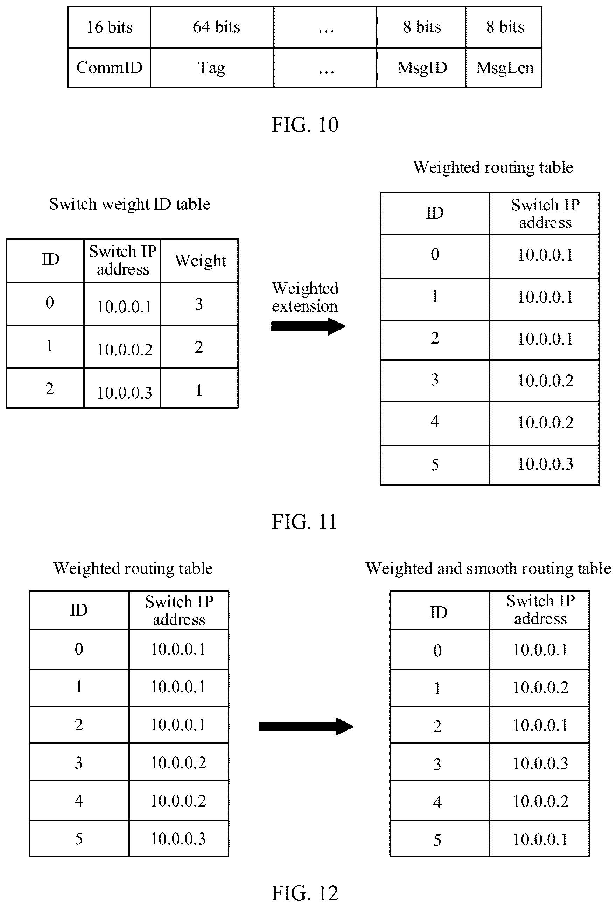

FIG. 10 is a diagram of a format of some fields of the in-network computing packet according to this embodiment of this application. As shown in FIG. 10, the IB payload field of the in-network computing packet in FIG. 8 may be extended, to include the communication group identifier (CommID), the communication operation tag (Tag), the in-network computing message identifier (MsgID), and the data flow length (MsgLen) in the IB payload field.

Step 703: The forwarding node performs, based on the in-network computing identifier of each of the plurality of in-network computing packets, aggregation computing on in-network computing packets that belong to a same in-network computing message in the plurality of in-network computing packets, to obtain at least one aggregated packet, where the at least one aggregated packet one-to-one corresponds to at least one in-network computing identifier.

In some embodiments, when the forwarding node stores the aggregation information mapping relationship, and the aggregation information mapping relationship stores the at least one in-network computing identifier and the data flow identifier corresponding to each in-network computing identifier, an implementation in which the forwarding node performs, based on the in-network computing identifier of each of the plurality of in-network computing packets, aggregation computing on the in-network computing packets that belong to the same in-network computing message in the plurality of in-network computing packets may be: for any first in-network computing packet, binding the first in-network computing packet to the first data flow identifier in the aggregation information mapping relationship; determining a plurality of data flow identifiers in the aggregation information mapping relationship that correspond to the first in-network computing identifier; and performing aggregation computing on in-network computing packets respectively bound to the plurality of data flow identifiers, to obtain an aggregated packet corresponding to the first in-network computing identifier.

Because the aggregation information relationship stores the data flow identifier corresponding to each in-network computing identifier, the aggregation computing may be performed on in-network computing packets respectively bound to data flow identifiers corresponding to a same in-network computing identifier that are in the aggregation information mapping relationship, to improve processing efficiency of the forwarding node.

It should be noted that the forwarding node performs aggregation computing only when receiving the in-network computing packets sent by all the uplink computing nodes. Based on this, in some embodiments, in a scenario in which the forwarding node stores the aggregation IP mapping relationship enumerated in Table 1, for the first in-network computing identifier in the aggregation information mapping relationship, the forwarding node may determine a quantity of data flow identifiers corresponding to the first in-network computing identifier. If the quantity of data flow identifiers corresponding to the first in-network computing identifier is equal to the communication group size in the aggregation IP mapping relationship, it indicates that in-network computing flows that are sent by all the uplink computing nodes for the same in-network computing message are currently received. Therefore, the aggregation computing may be performed in the following manner. Correspondingly, if the quantity of data flow identifiers corresponding to the first in-network computing identifier is less than the communication group size in the aggregation IP mapping relationship, it indicates that not the in-network computing flows that are sent by all the uplink computing nodes for the same in-network computing message are currently received, and the forwarding node may continue to wait.

In a scenario in which the data flow identifier includes the initial-packet sequence number, an implementation of performing aggregation computing on the in-network computing packets respectively bound to the plurality of data flow identifiers may be: for the in-network computing packets respectively bound to the plurality of data flow identifiers corresponding to the first in-network computing identifier, determining a packet sequence number of each bound in-network computing packet; determining an offset of each bound in-network computing packet based on an initial-packet sequence number in each of the plurality of data flow identifiers corresponding to the first in-network computing identifier and the packet sequence number of each bound in-network computing packet; and performing, based on the offset of each bound in-network computing packet, aggregation computing on in-network computing packets with a same offset.

In other words, for different in-network computing flows that belong to a same in-network computing message, the aggregation computing is performed on in-network computing packets with a same offset in the different in-network computing flows.

In addition, not all packets in the different in-network computing flows are simultaneously sent to the forwarding node. Therefore, when the forwarding node aggregates in-network computing packets for a specific offset in the different in-network computing flows, if an in-network computing packet for the offset in a specific in-network computing flow is not received, the forwarding node may currently continue to wait until all the in-network computing packets for the offset in the different in-network computing flows are received, and then perform aggregation computing.

Optionally, aggregation may alternatively be performed each time one in-network computing packet is received, without waiting for all the in-network computing packets. It should be noted that, in this scenario, the forwarding node continues to forward the aggregated packet only after determining that the in-network computing packets sent by all the uplink computing nodes are aggregated, in other words, when determining that an aggregation process is completed.

Step 704: The forwarding node forwards, by using a hash routing algorithm, each aggregated packet based on the in-network computing identifier corresponding to each of the at least one aggregated packet.

In this embodiment of this application, to forward the in-network computing packets that belong to the same in-network computing message to a same higher-layer forwarding node to continue the aggregation computing, the forwarding node forwards the aggregated packet by using the hash routing algorithm based on the in-network computing identifier.

In some embodiments, an implementation of step 704 may be: determining a first hash factor for a first aggregated packet in the at least one aggregated packet, where the first hash factor includes an in-network computing identifier corresponding to the first aggregated packet, and the first aggregated packet is any one of the at least one aggregated packet; determining a first routing identifier by using the hash routing algorithm based on the first hash factor, where the first routing identifier indicates a forwarding path; and forwarding the first aggregated packet based on the first routing identifier.

When the in-network computing identifier corresponding to the aggregated packet is used as a hash factor for routing, for two different aggregated packets obtained by two different bottom-layer forwarding nodes through aggregation, regardless of where in-network computing packets corresponding to the aggregated packets are from, the two bottom-layer forwarding nodes forward the aggregated packets to a same next hop according to the method provided in this embodiment of this application provided that the different aggregated packets correspond to a same in-network identifier, to ensure path consistency of in-network computing flows.

Optionally, in some other embodiments, in addition to including the in-network computing identifier corresponding to the first aggregated packet, the first hash factor may further include a protocol version number and a destination port number that are carried in an in-network computing packet corresponding to the first aggregated packet.

The protocol version number and the destination port number may indicate a communication protocol that the in-network computing packet currently complies with. When the hash factor includes the in-network computing identifier, the protocol version number, and the destination port number, packets that comply with a same communication protocol and belong to a same in-network computing message may be forwarded to a same forwarding node.

For example, in the scenario in which the in-network computing packet is the RoCEv2 packet, when the hash factor includes the in-network computing identifier, the protocol version number, and the destination port number, in-network computing packets that are based on the reliable RoCEv2 protocol and that belong to a same in-network message may be forwarded to a same next hop, to ensure path consistency of in-network computing flows.

For example, in a scenario in which the in-network computing identifier includes the communication group identifier and the in-network computing message identifier, the hash factor provided in this embodiment of this application is a 4-tuple, and therefore is referred to as a hash 4-tuple. Table 4 enumerates a hash 4-tuple according to this embodiment of this application. As enumerated in Table 4, the hash 4-tuple includes a protocol version number, a destination port number, a CommID, and a MsgID. The protocol and the destination port number identify that an in-network computing packet is transmitted through a reliable RoCEv2 connection. The CommID and the MsgID identify an in-network computing message to which the current in-network computing packet belongs.

Table 4

| Hash 4-tuple | | | |
|---|---|---|---|
| Protocol version number | Destination port number | Communication group identifier | In-network computing message identifier |

The forwarding node may determine a routing identifier by using the hash routing algorithm based on a new hash 4-tuple and the following formula:

$$k=\text{Hash}(\text{protocol, dstPort, commID, MsgID})$$

k represents the routing identifier, protocol represents the protocol version number, dstPort represents the destination port number, and key represents the routing identifier. Based on the hash 4-tuple enumerated in Table 3, the routing identifier k does not change with the source IP address and the source port number of the in-network computing packet. This can ensure consistency of forwarding paths that are of in-network computing packets belonging to a same in-network computing message and that are on different switches.

In addition, after determining the routing identifier k in the foregoing manner, the forwarding node performs a modulo operation (Modulo-N, Mod-N) on the routing identifier k and a length (N) of a forwarding table according to the following formula, and uses a result (ID) of the modulo operation as a target forwarding entry identifier, to determine a specific forwarding entry that is in the forwarding table and from which the aggregated packet is forwarded:

$$ID=k \% N$$

Table 5 is a forwarding table according to this embodiment of this application. As enumerated in Table 5, the forwarding table only presents all optional forwarding entries. Each forwarding entry corresponds to one forwarding path, to be specific, corresponds to one next-hop forwarding node. The next-hop forwarding node in Table 5 is represented by a switch IP address. In this case, multipath routing is random routing, and each forwarding entry has a same probability of being selected. Therefore, an in-network computing capability of a high-configuration forwarding node in a heterogeneous environment cannot be fully utilized.

Table 5

| ID | Switch IP address |
|---|---|
| 0 | 10.0.0.1 |
| 1 | 10.0.0.2 |
| 2 | 10.0.0.3 |

Based on this, in this embodiment of this application, to fully utilize an in-network computing capability of each forwarding node, a forwarding table configured on the forwarding node is improved. An improved forwarding table includes a plurality of forwarding entries, each forwarding entry indicates one forwarding path, the plurality of forwarding entries include a plurality of target forwarding entries, the plurality of target forwarding entries have a same next hop, a total quantity of the plurality of target forwarding entries indicates an in-network computing capability of the corresponding next hop, and the plurality of target entries are scattered in the forwarding table. The improved forwarding table may be referred to as a weighted and smooth routing table.

In this scenario, an implementation in which the forwarding node forwards, by using the hash routing algorithm, each aggregated packet based on the in-network computing identifier corresponding to each of the at least one aggregated packet may be: for a second aggregated packet in the at least one aggregated packet, forwarding the second aggregated packet by using the hash routing algorithm based on the forwarding table and an in-network computing identifier that corresponds to the second aggregated packet, where the second aggregated packet is any one of the at least one aggregated packet.

In the weighted and smooth routing table, the quantity of forwarding entries including the same next hop is set based on the in-network computing capability of the next hop. Therefore, a quantity of forwarding entries including a next hop that is a high-configuration forwarding node is large. This can improve a probability of selecting these forwarding entries, and correspondingly increase traffic forwarded to the high-configuration forwarding node, to fully utilize an in-network computing capability of the high-configuration forwarding node.

In addition, if the target forwarding entries including the same next hop are centrally placed in a same location in the forwarding table, assuming that there are a large quantity of target forwarding entries, a probability that the forwarding node selects another forwarding entry is extremely low. Consequently, network congestion easily occurs on the next hop corresponding to the target forwarding entries, and zero load occurs on a next hop corresponding to the another forwarding entry. Therefore, in this embodiment of this application, the plurality of target entries including the same next hop are scattered in the forwarding table, to ensure a load amount of the next hop included in the another forwarding entry.

The following describes a process of generating the weighted and smooth routing table.

The process of generating the weighted and smooth routing table includes two steps: a weighting process and a smoothing process.

FIG. 11 is a diagram of the weighting process according to this embodiment of this application. As shown in FIG. 11, the forwarding node maintains an initial forwarding table during network initialization. Each forwarding entry (or routing item) in the initial forwarding table includes a weight and a switch IP address (used as a next hop). Therefore, the initial forwarding table is also referred to as a switch weight ID table. The weight represents a capacity limitation of computing resources of a corresponding switch on an in-network computing flow on a link, in other words, represents an in-network computing capability of the corresponding switch. Then, the forwarding entry is extended based on the weight to increase a quantity of routing items including a same next hop, so that a probability that a next hop with a large weight is selected is increased, and traffic is allocated based on the weight. A weighted extended forwarding table is obtained.

As shown in FIG. 11, a weight of a next hop being 10.0.0.1 is 3. Therefore, there are three forwarding entries including the next hop being 10.0.0.1 in the weighted extended forwarding table. Correspondingly, a weight of a next hop being 10.0.0.2 is 2. Therefore, there are two forwarding entries including the next hop being 10.0.0.1 in the weighted extended forwarding table. A weight of a next hop being 10.0.0.3 is 1. Therefore, there is one forwarding entry including the next hop being 10.0.0.1 in the weighted extended forwarding table.

It should be noted that, the modulo operation (Mod-N) used when the routing identifier is determined is a hash operation, and an empty bucket percent and a collision percent in the hash operation damage load balancing between different forwarding nodes. A mod-N routing process is equivalent to placing m routing identifiers (keys) into N (the total quantity of forwarding entries) buckets randomly. Therefore, a part of forwarding nodes are not selected (are empty buckets), and a part of forwarding nodes are frequently selected (a collision occurs). A higher empty bucket percent indicates that a forwarding node with a smaller weight is less likely to be allocated with traffic and is in an underloaded state, and therefore a balancing effect is poor. A higher collision percent indicates that traffic is concentrated on a forwarding node with a larger weight, the forwarding node with the larger weight is in an overloaded state, and a balancing effect is also poor.

A relationship between a load factor (load factor = m/N), the collision percent (collision), and the empty bucket percent (empty) is as follows: As the load factor (load factor) increases, the empty bucket percent decreases, but the collision percent increases. Therefore, a low empty bucket percent and a low collision percent cannot be both ensured only by adjusting values of m and N.

Based on this, in this embodiment of this application, the location of the forwarding entry is adjusted to mitigate negative impact of a high empty bucket percent and a high collision percent on the load balancing effect. Specifically, the location of each forwarding entry in the weighted extended forwarding table is adjusted, so that forwarding entries including a same next hop are deployed in nonconsecutive locations in the forwarding table. This prevents empty bucket events from being concentrated on a forwarding node with a small weight, and ensures a load distribution amount on a link with a small weight. In addition, this prevents collision events from being concentrated on the forwarding node with the large weight, to avoid traffic overload on the forwarding node with the large weight.

FIG. 12 is a diagram of the smoothing process according to this embodiment of this application. As shown in FIG. 12, a smooth forwarding table includes three scattered forwarding entries including a same next hop being 10.0.0.1 and two scattered forwarding entries including a same next hop being 10.0.0.2.

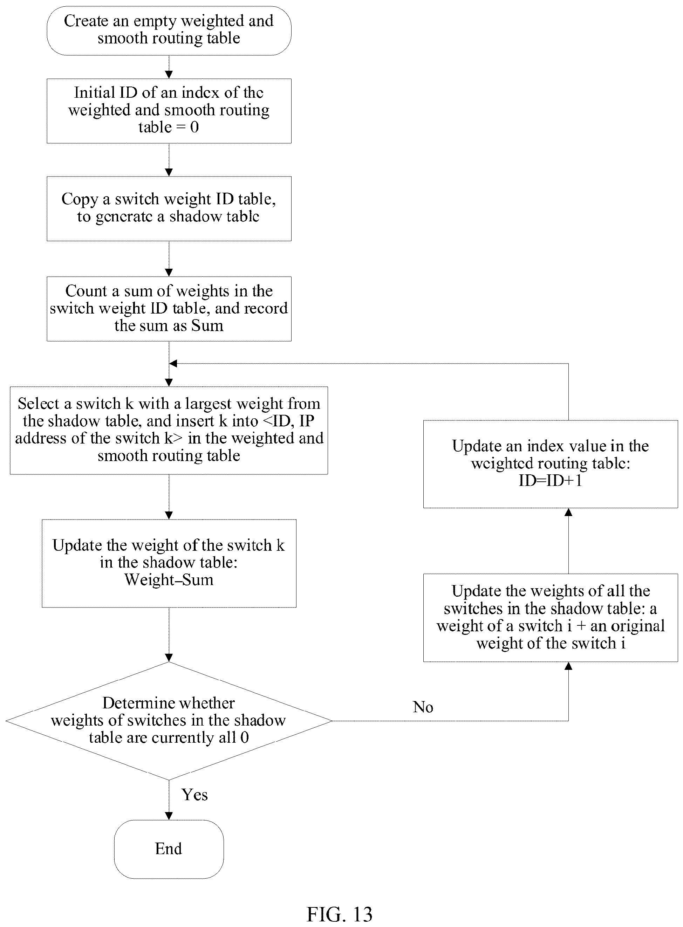

FIG. 13 is a schematic flowchart of generating a weighted and smooth routing table according to this embodiment of this application. FIG. 13 is used as an example for description. A process of generating the weighted and smooth routing table is not limited in this embodiment of this application.

As shown in FIG. 13, the process of generating the weighted and smooth routing table includes the following steps.

(1) Initialization:

a. Create an empty weighted and smooth routing table with an initial ID = 0.
b. Copy a switch weight ID table, namely, the foregoing initial forwarding table, to generate a shadow table.
c. Calculate a sum of weights of all switches in the initial forwarding table, and record the sum as Sum.

(2) Weighting and smoothing processing:

a. Select a switch k with a largest weight from the shadow table, insert k into a location indicated by a current ID in the empty routing table, and then increase an ID value by 1.
b. Update the weight value of the switch k in the shadow table: subtracting Sum from the weight of the switch k.
c. Determine whether weights of switches in the shadow table are all 0; and when the condition is met, the weighting and smoothing of the routing table complete; or when the condition is not met, proceed to step d.
d. Update the weight values of all the switches in the shadow table: Weight of a switch i = Current weight of the switch i + Original weight of the switch i, where the original weight of the switch i is a weight of the switch i in the switch weight ID table.
e. Repeat steps a to d.

In conclusion, the following several technical effects can be implemented according to the method provided in this embodiment of this application.

(1) In this embodiment of this application, a path does not need to be statically configured in advance, but the forwarding node performs hash routing by using the in-network computing identifier of the in-network computing packet. This can ensure that the in-network computing packets belonging to the same in-network computing message are routed to the same next hop, to be specific, a path consistency requirement of in-network computing traffic can be met. In addition, because static path configuration is not needed, a routing policy of the forwarding node is transparent to the computing node. This enhances transmission security of the in-network computing flow.
(2) Because the static path configuration is not needed, a centralized management node does not need to be additionally configured to statically configure a path. This simplifies network design. Even if the network subsequently changes, network maintenance costs are low.
(3) In this embodiment of this application, the in-network computing flow may be transmitted through remote direct memory access over converged Ethernet (RDMA over Converged Ethernet, RoCE) instead of unreliable UDP, to improve transmission reliability of the in-network flow.
(4) In this embodiment of this application, the weighting and smoothing processing may be further performed on the forwarding table. The smoothing processing is performed on the forwarding table, so that after the load balancing is performed by using the forwarding table, an in-network computing flow received by each forwarding node matches a resource limitation of the forwarding node as much as possible.

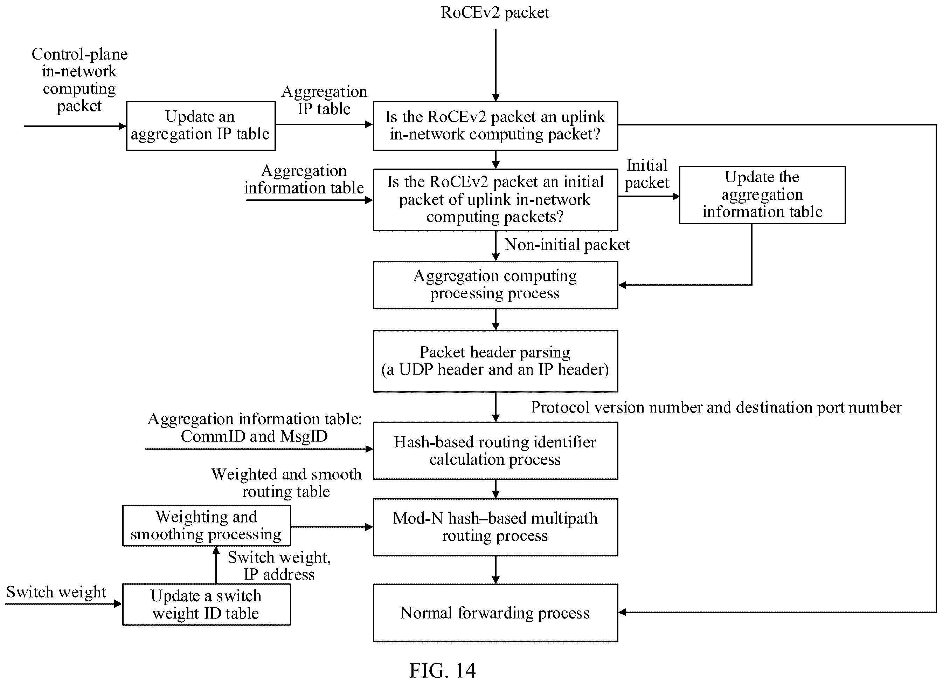

The following uses FIG. 14 as an example to describe the method provided in this embodiment of this application. It should be noted that FIG. 14 is an optional implementation of the method provided in this embodiment of this application, and does not constitute a limitation on the method provided in this embodiment of this application.

As shown in FIG. 14, the in-network computing packet forwarding method includes the following steps.

Step 1: Update a switch weight ID table based on a weight of a switch, and perform weighting and smoothing processing, to generate a weighted and smooth routing table. Update an aggregation IP table (for example, the aggregation IP mapping relationship enumerated in Table 1) based on a control-plane in-network computing packet, and record a true CommID, a source IP address, a source port, a QPN, and a group size in the aggregation IP table.

Step 2: After receiving a RoCEv2 packet, a switch first determines, based on the aggregation IP table, whether the message is an uplink in-network computing message.

Step 2.1: If the message is the uplink in-network computing message, determine, based on information in an aggregation information table (for example, the aggregation information mapping relationship enumerated in Table 2), whether the current in-network computing message is an uplink non-initial packet.

Step 2.1.1: If the current in-network computing message is the uplink non-initial packet, perform an aggregation computing processing process, and then proceed to step 3.

Step 2.1.2: If the current in-network computing message is an uplink initial packet, parse a packet header, record information such as a CommID, a Tag, a MsgID, a MsgLen, and a PSN in the in-network computing packet in the aggregation information table, perform an aggregation computing processing process, and then proceed to step 3.

Step 2.2: If the message is not the uplink in-network computing message, determine that the current packet is another packet, for example, a downlink result packet or conventional traffic, and directly forward the packet.

Step 3: For an in-network computing packet on which the aggregation computing processing has been performed, parse an IP field and a UDP field in a packet header to extract a protocol version number protocol and a destination port number dstPort, and obtain, from the aggregation information table, a communication group identifier CommID and a message identifier MsgID that correspond to the in-network computing packet, to form a new hash factor 4-tuple.

Step 4: Calculate a unique routing identifier based on the new hash factor.

Step 5: Perform mod-N hash-based routing based on the calculated routing identifier and the weighted and smooth routing table, determine a next routing and forwarding port for a packet obtained through the aggregation computing, and then perform a forwarding process.

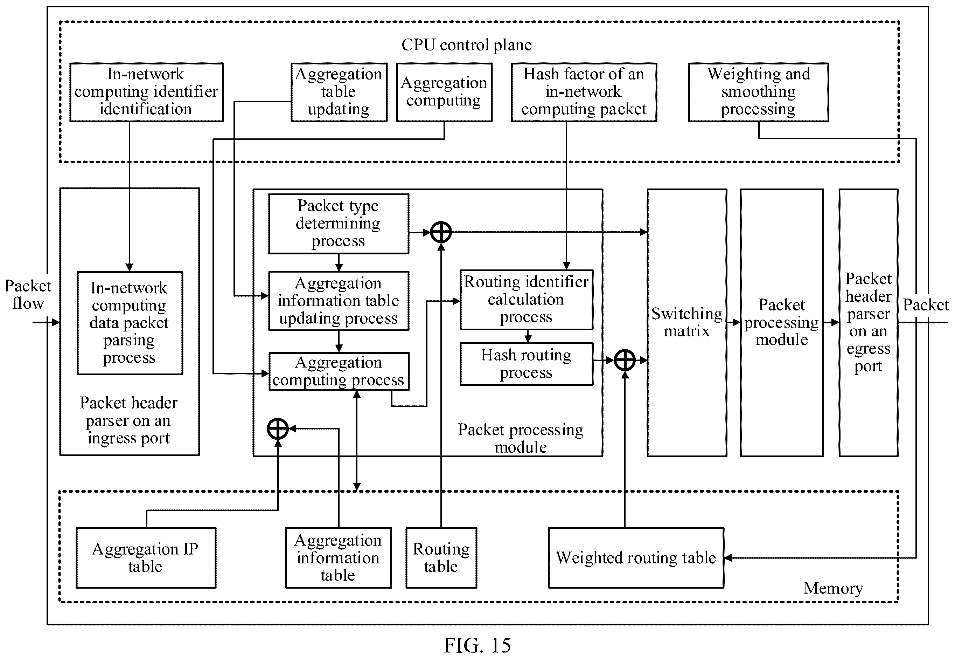

According to the method in the foregoing embodiment, embodiments of this application further provide an architecture of a forwarding node. FIG. 15 is a diagram of an architecture of a forwarding node according to an embodiment of this application. The forwarding node is configured to implement the in-network computing packet forwarding method in the foregoing embodiment.

As shown in FIG. 15, the forwarding node includes five components such as a packet header parser, a packet processing module, a switching matrix, a CPU control plane, and a memory. The packet header parser, the packet processing module, and the switching matrix may be referred to as a data forwarding plane. The packet header parser is deployed on both ingress and egress ports. Components involved in embodiments of this application include the CPU control plane, the packet header parser on the ingress port, and the packet processing module.

In some embodiments, inferior processing procedures for all in-network computing packets are first performed by the CPU control plane, and then a processing result is delivered to the data forwarding plane for execution through a preset procedure. For example, an in-network computing identifier identification process, an aggregation table update process, an aggregation computing process, a process of extracting a hash factor of an in-network computing packet, and a calculation smoothing process may all be performed by the CPU control plane, and then an execution result is notified to a data forwarding table. A whole in-network computing packet forwarding process is performed by the data forwarding table based on a flowchart in FIG. 15.

In addition, as shown in FIG. 15, tables obtained by the CPU control plane through processing such as an aggregation IP table, an aggregation information table, and a weighted routing table are directly stored in the memory.

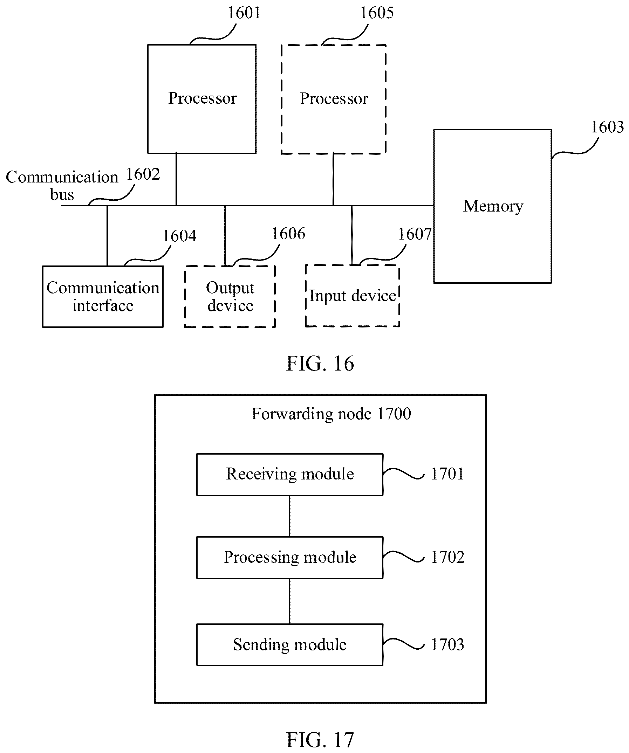

FIG. 16 is a diagram of a structure of a computer device according to an embodiment of this application. Any forwarding node in the foregoing embodiments may be implemented by the computer device shown in FIG. 16. Refer to FIG. 16. The computer device includes at least one processor 1601, a communication bus 1602, a memory 1603, and at least one communication interface 1604.

The processor 1601 may be a general-purpose central processing unit (central processing unit, CPU), an application-specific integrated circuit (application-specific integrated circuit, ASIC), or one or more integrated circuits configured to control program execution of the solutions of this application.

The communication bus 1602 may include a path for information transmission between the foregoing components.

The memory 1603 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM), another compact disc storage, an optical disc storage (including a compact disc, a laser disc, an optical disc, a digital versatile disc, a Blu-ray disc, and the like), a magnetic disk, another magnetic storage device, or any other medium that can be configured to carry or store expected program code in a form of an instruction or a data structure and that can be accessed by a computer. However, the memory is not limited thereto. The memory 1603 may exist independently, and is connected to the processor 1601 through the communication bus 1602. Alternatively, the memory 1603 may be integrated with the processor 1601.

The memory 1603 is configured to store program code for executing the solutions of this application, and the processor 1601 controls the execution. The processor 1601 is configured to execute the program code stored in the memory 1603. The program code may include one or more software modules. The forwarding node in the foregoing embodiments may determine, by using the processor 1601 and one or more software modules in the program code in the memory 1603, data for application development.

The communication interface 1604 is any apparatus such as a transceiver, and is configured to communicate with another device or a communication network, for example, the Ethernet, a radio access network (radio access network, RAN), a wireless local area network (wireless local area network, WLAN), or the like.

During specific implementation, in an embodiment, the computer device may include a plurality of processors, for example, the processor 1601 and a processor 1605 shown in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer device may further include an output device 1606 and an input device 1607. The output device 1606 communicates with the processor 1601, and may display information in a plurality of manners. For example, the output device 1606 may be a liquid crystal display (liquid crystal display, LCD), a light emitting diode (light emitting diode, LED) display device, a cathode ray tube (cathode ray tube, CRT) display device, or a projector (projector). The input device 1607 communicates with the processor 1601, and may receive an input from a user in a plurality of manners. For example, the input device 1607 may be a mouse, a keyboard, a touchscreen device, or a sensor device.

The computer device may be a general-purpose computer device or a special-purpose computer device. During specific implementation, the computer device may be any communication device that has a data processing capability and a forwarding capability, for example, a switch that has an in-network computing capability. A type of the computer device is not limited in this embodiment of this application.

FIG. 17 is a diagram of a forwarding node being an apparatus according to an embodiment of this application. As shown in FIG. 17, the forwarding node 1700 includes the following modules:

a receiving module 1701, configured to receive a plurality of in-network computing packets;

a processing module 1702, configured to determine an in-network computing identifier of each of the plurality of in-network computing packets, where the in-network computing identifier indicates an in-network computing message to which the corresponding in-network computing packet belongs, where

the processing module 1702 is further configured to perform, based on the in-network computing identifier of each of the plurality of in-network computing packets, aggregation computing on in-network computing packets that belong to a same in-network computing message in the plurality of in-network computing packets, to obtain at least one aggregated packet, where the at least one aggregated packet one-to-one corresponds to at least one in-network computing identifier; and

a sending module 1703, configured to forward, by using a hash routing algorithm, each aggregated packet based on the in-network computing identifier corresponding to each of the at least one aggregated packet.

Optionally, the forwarding node stores an aggregation information mapping relationship, and the aggregation information mapping relationship includes at least one in-network computing identifier and a data flow identifier respectively corresponding to the at least one in-network computing identifier.

The processing module is configured to:

for a first in-network computing packet in the plurality of in-network computing packets, determine a data flow identifier corresponding to the first in-network computing packet, to obtain a first data flow identifier, where the first in-network computing packet is any one of the plurality of in-network computing packets; and

if the first data flow identifier exists in the aggregation information mapping relationship, obtain, from the aggregation information mapping relationship, an in-network computing identifier corresponding to the first data flow identifier, to obtain a first in-network computing identifier, and use the first in-network computing identifier as an in-network computing identifier of the first in-network computing packet.

Optionally, the processing module is further configured to:

if the first data flow identifier does not exist in the aggregation information mapping relationship, obtain the first data flow identifier and the first in-network computing identifier from a packet header of the first in-network computing packet; and

add a correspondence between the first in-network computing identifier and the first data flow identifier to the aggregation information mapping relationship.

Optionally, the processing module is configured to:

bind the first in-network computing packet to the first data flow identifier in the aggregation information mapping relationship; and

perform aggregation computing on in-network computing packets respectively bound to a plurality of data flow identifiers corresponding to the first in-network computing identifier that are in the aggregation information mapping relationship, to obtain an aggregated packet corresponding to the first in-network computing identifier.

Optionally, the processing module is configured to:

for the in-network computing packets respectively bound to the plurality of data flow identifiers corresponding to the first in-network computing identifier, determine a packet sequence number of each bound in-network computing packet;

determine an offset of each bound in-network computing packet based on an initial-packet sequence number corresponding to each of the plurality of data flow identifiers corresponding to the first in-network computing identifier and the packet sequence number of each bound in-network computing packet; and

perform, based on the offset of each bound in-network computing packet, aggregation computing on in-network computing packets with a same offset.

Optionally, the data flow identifier includes the initial-packet sequence number, a communication operation tag, and a data flow length.

Optionally, the in-network computing identifier includes a communication group identifier and an in-network computing message identifier, the communication group identifier indicates a communication group in which in-network computing is currently performed, and the in-network computing message identifier indicates an in-network computing message transmitted in the communication group.

Optionally, the plurality of in-network computing packets are remote direct memory access over converged Ethernet RoCE packets, the forwarding node stores at least one remote direct memory access RDMA connection identifier, the RDMA connection identifier indicates an RDMA connection between a first computing node and a second computing node, and the first computing node is a computing node accessed by the forwarding node.

The processing module is further configured to:

for a second in-network computing packet in the plurality of in-network computing packets, obtain an RDMA connection identifier carried in the second in-network computing packet, where the second in-network computing packet is any one of the plurality of in-network computing packets; and

if the RDMA connection identifier carried in the second in-network computing packet exists in the stored at least one RDMA connection identifier, perform an operation of determining an in-network computing identifier corresponding to the second in-network computing packet.

Optionally, the RDMA connection identifier includes a source Internet protocol IP address, a source port identifier, and a destination queue number QPN.

Optionally, the receiving module is further configured to receive a notification message from an uplink communication link.

The processing module is further configured to obtain a target RDMA connection identifier carried in the notification message, where the notification message is for notifying that an RDMA connection indicated by the target RDMA connection identifier is for transmission of an in-network computing packet.

The processing module is further configured to store the target RDMA connection identifier.

Optionally, the processing module is configured to:

obtain type information carried in the notification message; and

if the type information indicates that the notification message is a notification message for an in-network computing packet, perform the operation of obtaining a target RDMA connection identifier carried in the notification message.

Optionally, the sending module is configured to:

determine a first hash factor for a first aggregated packet in the at least one aggregated packet, where the first hash factor includes an in-network computing identifier corresponding to the first aggregated packet, and the first aggregated packet is any one of the at least one aggregated packet;

determine a first routing identifier by using the hash routing algorithm based on the first hash factor, where the first routing identifier indicates a forwarding path; and

forward the first aggregated packet based on the first routing identifier.

Optionally, the first hash factor further includes a protocol version number and a destination port number that are carried in an in-network computing packet corresponding to the first aggregated packet.

Optionally, the sending module is configured to:

for a second aggregated packet in the at least one aggregated packet, forward the second aggregated packet by using the hash routing algorithm based on a forwarding table and an in-network computing identifier that corresponds to the second aggregated packet, where the second aggregated packet is any one of the at least one aggregated packet, where

the forwarding table includes a plurality of target forwarding entries, next hops in the plurality of target forwarding entries are the same, a total quantity of the plurality of target forwarding entries indicates an in-network computing capability of the corresponding next hop, and the plurality of target forwarding entries are scattered in the forwarding table.

In this embodiment of this application, after aggregating the in-network computing packets, the forwarding node does not need to perform forwarding through a path that is statically configured in advance, but performs hash routing by using the in-network computing identifier of the in-network computing packet. This can ensure that the in-network computing packets belonging to the same in-network computing message are routed to a same next hop, to be specific, a path consistency requirement of in-network computing traffic can be met while dynamic routing is implemented, to improve in-network computing packet forwarding flexibility.

In addition, because static path configuration is not needed, a routing policy of the forwarding node is transparent to a computing node. This enhances transmission security of an in-network computing flow. Moreover, because the static path configuration is not needed, a centralized management node does not need to be additionally configured to statically configure a path. This simplifies network design. Even if a network subsequently changes, network maintenance costs are low.

It should be noted that, when the forwarding node provided in the foregoing embodiment forwards the in-network computing packet, division into the foregoing functional modules is used only as an example for description. During actual application, the foregoing functions may be allocated to different functional modules for implementation as required, in other words, an internal structure of the device is divided into different functional modules, to implement all or some of the functions described above. In addition, the forwarding node provided in the foregoing embodiment pertains to a same concept as the in-network computing packet forwarding method embodiment. For a specific implementation process of the forwarding node, refer to the method embodiment. Details are not described herein again.

All or some of the foregoing embodiments may be implemented by software, hardware, firmware, or any combination thereof. When software is for implementing the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium, or may be sent from a computer-readable storage medium to another computer-readable storage medium. For example, the computer instructions may be sent from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semi-conductive medium (for example, a solid-state drive (solid-state drive, SSD)).

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing content is not intended to limit embodiments of this application. Any modification, equivalent replacement, improvement, or the like made within the spirit and principle of embodiments of this application shall fall within the protection scope of embodiments of this application.

**Claims**

1. An in-network computing packet forwarding method, wherein the method comprises:

receiving, by a forwarding node, a plurality of in-network computing packets;

determining, by the forwarding node, an in-network computing identifier of each of the plurality of in-network computing packets, wherein the in-network computing identifier indicates an in-network computing message to which the corresponding in-network computing packet belongs;

performing, by the forwarding node based on the in-network computing identifier of each of the plurality of in-network computing packets, aggregation computing on in-network computing packets that belong to a same in-network computing message in the plurality of in-network computing packets, to obtain at least one aggregated packet, wherein the at least one aggregated packet one-to-one corresponds to at least one in-network computing identifier; and

forwarding, by the forwarding node by using a hash routing algorithm, each aggregated packet based on the in-network computing identifier corresponding to each of the at least one aggregated packet.

2. The method according to claim 1, wherein the forwarding node stores an aggregation information mapping relationship, and the aggregation information mapping relationship comprises at least one in-network computing identifier and a data flow identifier respectively corresponding to the at least one in-network computing identifier; and

the determining, by the forwarding node, an in-network computing identifier of each of the plurality of in-network computing packets comprises:

for a first in-network computing packet in the plurality of in-network computing packets, determining a data flow identifier corresponding to the first in-network computing packet, to obtain a first data flow identifier, wherein the first in-network computing packet is any one of the plurality of in-network computing packets; and

if the first data flow identifier exists in the aggregation information mapping relationship, obtaining, from the aggregation information mapping relationship, an in-network computing identifier corresponding to the first data flow identifier, to obtain a first in-network computing identifier, and using the first in-network computing identifier as an in-network computing identifier of the first in-network computing packet.

3. The method according to claim 2, wherein the method further comprises:

if the first data flow identifier does not exist in the aggregation information mapping relationship, obtaining the first data flow identifier and the first in-network computing identifier from a packet header of the first in-network computing packet; and

adding a correspondence between the first in-network computing identifier and the first data flow identifier to the aggregation information mapping relationship.

4. The method according to claim 2 or 3, wherein the performing, by the forwarding node based on the in-network computing identifier of each of the plurality of in-network computing packets, aggregation computing on in-network computing packets that belong to a same in-network computing message in the plurality of in-network computing packets comprises:

binding the first in-network computing packet to the first data flow identifier in the aggregation information mapping relationship; and

performing aggregation computing on in-network computing packets respectively bound to a plurality of data flow identifiers corresponding to the first in-network computing identifier that are in the aggregation information mapping relationship, to obtain an aggregated packet corresponding to the first in-network computing identifier.

5. The method according to claim 4, wherein the performing aggregation computing on in-network computing packets respectively bound to a plurality of data flow identifiers corresponding to the first in-network computing identifier that are in the aggregation information mapping relationship comprises:

for the in-network computing packets respectively bound to the plurality of data flow identifiers corresponding to the first in-network computing identifier, determining a packet sequence number of each bound in-network computing packet;

determining an offset of each bound in-network computing packet based on an initial-packet sequence number corresponding to each of the plurality of data flow identifiers corresponding to the first in-network computing identifier and the packet sequence number of each bound in-network computing packet; and

performing, based on the offset of each bound in-network computing packet, aggregation computing on in-network computing packets with a same offset.

6. The method according to any one of claims 2 to 5, wherein the data flow identifier comprises the initial-packet sequence number, a communication operation tag, and a data flow length.

7. The method according to any one of claims 1 to 6, wherein the in-network computing identifier comprises a communication group identifier and an in-network computing message identifier, the communication group identifier indicates a communication group in which in-network computing is currently performed, and the in-network computing message identifier indicates an in-network computing message transmitted in the communication group.

8. The method according to any one of claims 1 to 7, wherein the plurality of in-network computing packets are remote direct memory access over converged Ethernet RoCE packets, the forwarding node stores at least one remote direct memory access RDMA connection identifier, the RDMA connection identifier indicates an RDMA connection between a first computing node and a second computing node, and the first computing node is a computing node accessed by the forwarding node; and
   before the determining, by the forwarding node, an in-network computing identifier of each of the plurality of in-network computing packets, the method further comprises:

   for a second in-network computing packet in the plurality of in-network computing packets, obtaining, by the forwarding node, an RDMA connection identifier carried in the second in-network computing packet, wherein the second in-network computing packet is any one of the plurality of in-network computing packets; and
   if the RDMA connection identifier carried in the second in-network computing packet exists in the stored at least one RDMA connection identifier, performing an operation of determining an in-network computing identifier corresponding to the second in-network computing packet.

9. The method according to claim 8, wherein the RDMA connection identifier comprises a source Internet protocol IP address, a source port identifier, and a destination queue number QPN.

10. The method according to claim 8 or 9, wherein the method further comprises:

    receiving, by the forwarding node, a notification message from an uplink communication link;
    obtaining, by the forwarding node, a target RDMA connection identifier carried in the notification message, wherein the notification message is for notifying that an RDMA connection indicated by the target RDMA connection identifier is for transmission of an in-network computing packet; and
    storing, by the forwarding node, the target RDMA connection identifier.

11. The method according to claim 10, wherein the obtaining, by the forwarding node, a target RDMA connection identifier carried in the notification message comprises:

    obtaining, by the forwarding node, type information carried in the notification message; and
    if the type information indicates that the notification message is a notification message for an in-network computing packet, performing the operation of obtaining a target RDMA connection identifier carried in the notification message.

12. The method according to any one of claims 1 to 11, wherein the forwarding, by the forwarding node by using a hash routing algorithm, each aggregated packet based on the in-network computing identifier corresponding to each of the at least one aggregated packet comprises:

    determining a first hash factor for a first aggregated packet in the at least one aggregated packet, wherein the first hash factor comprises an in-network computing identifier corresponding to the first aggregated packet, and the first aggregated packet is any one of the at least one aggregated packet;
    determining a first routing identifier by using the hash routing algorithm based on the first hash factor, wherein the first routing identifier indicates a forwarding path; and
    forwarding the first aggregated packet based on the first routing identifier.

13. The method according to claim 12, wherein the first hash factor further comprises a protocol version number and a destination port number that are carried in an in-network computing packet corresponding to the first aggregated packet.

14. The method according to any one of claims 1 to 13, wherein the forwarding, by the forwarding node by using a hash routing algorithm, each aggregated packet based on the in-network computing identifier corresponding to each of the at least one aggregated packet comprises:

for a second aggregated packet in the at least one aggregated packet, forwarding the second aggregated packet by using the hash routing algorithm based on a forwarding table and an in-network computing identifier that corresponds to the second aggregated packet, wherein the second aggregated packet is any one of the at least one aggregated packet, wherein

the forwarding table comprises a plurality of target forwarding entries, next hops in the plurality of target forwarding entries are the same, a total quantity of the plurality of target forwarding entries indicates an in-network computing capability of the corresponding next hop, and the plurality of target forwarding entries are scattered in the forwarding table.

15. A forwarding node, wherein the forwarding node comprises:

a receiving module, configured to receive a plurality of in-network computing packets;

a processing module, configured to determine an in-network computing identifier of each of the plurality of in-network computing packets, wherein the in-network computing identifier indicates an in-network computing message to which the corresponding in-network computing packet belongs, wherein

the processing module is further configured to perform, based on the in-network computing identifier of each of the plurality of in-network computing packets, aggregation computing on in-network computing packets that belong to a same in-network computing message in the plurality of in-network computing packets, to obtain at least one aggregated packet, wherein the at least one aggregated packet one-to-one corresponds to at least one in-network computing identifier; and

a sending module, configured to forward, by using a hash routing algorithm, each aggregated packet based on the in-network computing identifier corresponding to each of the at least one aggregated packet.

16. The forwarding node according to claim 15, wherein the forwarding node stores an aggregation information mapping relationship, and the aggregation information mapping relationship comprises at least one in-network computing identifier and a data flow identifier respectively corresponding to the at least one in-network computing identifier; and the processing module is configured to:

for a first in-network computing packet in the plurality of in-network computing packets, determine a data flow identifier corresponding to the first in-network computing packet, to obtain a first data flow identifier, wherein the first in-network computing packet is any one of the plurality of in-network computing packets; and

if the first data flow identifier exists in the aggregation information mapping relationship, obtain, from the aggregation information mapping relationship, an in-network computing identifier corresponding to the first data flow identifier, to obtain a first in-network computing identifier, and use the first in-network computing identifier as an in-network computing identifier of the first in-network computing packet.

17. The forwarding node according to claim 16, wherein the processing module is further configured to:

if the first data flow identifier does not exist in the aggregation information mapping relationship, obtain the first data flow identifier and the first in-network computing identifier from a packet header of the first in-network computing packet; and

add a correspondence between the first in-network computing identifier and the first data flow identifier to the aggregation information mapping relationship.

18. The forwarding node according to claim 16 or 17, wherein the processing module is configured to:

bind the first in-network computing packet to the first data flow identifier in the aggregation information mapping relationship; and

perform aggregation computing on in-network computing packets respectively bound to a plurality of data flow identifiers corresponding to the first in-network computing identifier that are in the aggregation information mapping relationship, to obtain an aggregated packet corresponding to the first in-network computing identifier.

19. The forwarding node according to claim 18, wherein the processing module is configured to:

for the in-network computing packets respectively bound to the plurality of data flow identifiers corresponding to the first in-network computing identifier, determine a packet sequence number of each bound in-network computing packet;

determine an offset of each bound in-network computing packet based on an initial-packet sequence number corresponding to each of the plurality of data flow identifiers corresponding to the first in-network computing identifier and the packet sequence number of each bound in-network computing packet; and

perform, based on the offset of each bound in-network computing packet, aggregation computing on in-network computing packets with a same offset.

20. The forwarding node according to any one of claims 16 to 19, wherein the data flow identifier comprises the initial-packet sequence number, a communication operation tag, and a data flow length.

21. The forwarding node according to any one of claims 15 to 20, wherein the in-network computing identifier comprises a communication group identifier and an in-network computing message identifier, the communication group identifier indicates a communication group in which in-network computing is currently performed, and the in-network computing message identifier indicates an in-network computing message transmitted in the communication group.

22. The forwarding node according to any one of claims 15 to 21, wherein the plurality of in-network computing packets are remote direct memory access over converged Ethernet RoCE packets, the forwarding node stores at least one remote direct memory access RDMA connection identifier, the RDMA connection identifier indicates an RDMA connection between a first computing node and a second computing node, and the first computing node is a computing node accessed by the forwarding node; and

the processing module is further configured to:

for a second in-network computing packet in the plurality of in-network computing packets, obtain an RDMA connection identifier carried in the second in-network computing packet, wherein the second in-network computing packet is any one of the plurality of in-network computing packets; and

if the RDMA connection identifier carried in the second in-network computing packet exists in the stored at least one RDMA connection identifier, perform an operation of determining an in-network computing identifier corresponding to the second in-network computing packet.

23. The forwarding node according to claim 22, wherein the RDMA connection identifier comprises a source Internet protocol IP address, a source port identifier, and a destination queue number QPN.

24. The forwarding node according to claim 22 or 23, wherein

the receiving module is further configured to receive a notification message from an uplink communication link;

the processing module is further configured to obtain a target RDMA connection identifier carried in the notification message, wherein the notification message is for notifying that an RDMA connection indicated by the target RDMA connection identifier is for transmission of an in-network computing packet; and

the processing module is further configured to store the target RDMA connection identifier.

25. The forwarding node according to claim 24, wherein the processing module is configured to:

obtain type information carried in the notification message; and

if the type information indicates that the notification message is a notification message for an in-network computing packet, perform the operation of obtaining a target RDMA connection identifier carried in the notification message.

26. The forwarding node according to any one of claims 15 to 25, wherein the sending module is configured to:

determine a first hash factor for a first aggregated packet in the at least one aggregated packet, wherein the first hash factor comprises an in-network computing identifier corresponding to the first aggregated packet, and the first aggregated packet is any one of the at least one aggregated packet;

determine a first routing identifier by using the hash routing algorithm based on the first hash factor, wherein the first routing identifier indicates a forwarding path; and

forward the first aggregated packet based on the first routing identifier.

27. The forwarding node according to claim 26, wherein the first hash factor further comprises a protocol version number and a destination port number that are carried in an in-network computing packet corresponding to the first aggregated packet.

28. The forwarding node according to any one of claims 15 to 27, wherein the sending module is configured to:

for a second aggregated packet in the at least one aggregated packet, forward the second aggregated packet by using the hash routing algorithm based on a forwarding table and an in-network computing identifier that corresponds to the second aggregated packet, wherein the second aggregated packet is any one of the at least one aggregated packet, wherein

the forwarding table comprises a plurality of target forwarding entries, next hops in the plurality of target forwarding entries are the same, a total quantity of the plurality of target forwarding entries indicates an in-network computing capability of the corresponding next hop, and the plurality of target forwarding entries are scattered in the forwarding table.

29. A forwarding node, wherein the forwarding node comprises a memory and a processor, wherein

the memory is configured to store a program that supports the apparatus in performing the method according to any one of claims 1 to 14, and store data for implementing the method according to any one of claims 1 to 14; and the processor is configured to execute the program stored in the memory.

30. A computer-readable storage medium, wherein the computer-readable storage medium stores instructions; and when the instructions are run on a computer, the computer is enabled to perform the method according to any one of claims 1 to 14.

Scenario 1: In-network computing
is completed through ToR

Scenario 2: In-network computing
cannot be completed through ToR

FIG. 1

Scenario 1: In-network computing is
completed through Spine (a spine switch)

Scenario 2: In-network computing
cannot be completed through Spine

FIG. 2

Uplink data transmission, in-path
aggregation

FIG. 3

Equal cost multi path     ≠     Ideal

FIG. 4

FIG. 5

FIG. 6

A forwarding node receives a plurality of in-network computing packets ⟶ 701

The forwarding node determines an in-network computing identifier of each of the plurality of in-network computing packets, where the in-network computing identifier indicates an in-network computing message to which the corresponding in-network computing packet belongs ⟶ 702

The forwarding node performs, based on the in-network computing identifier of each of the plurality of in-network computing packets, aggregation computing on in-network computing packets that belong to a same in-network computing message in the plurality of in-network computing packets, to obtain at least one aggregated packet, where the at least one aggregated packet one-to-one corresponds to at least one in-network computing identifier ⟶ 703

The forwarding node forwards, by using a hash routing algorithm, each aggregated packet based on the in-network computing identifier corresponding to each of the at least one aggregated packet ⟶ 704

FIG. 7

| 22 bytes | 20 bytes | 8 bytes | 12 bytes | N bytes | 4 bytes | 4 bytes |
|----------|----------|---------|----------|---------|---------|---------|
| ETH L2 | IP header | UDP header | IB TH | **IB payload** | ICRC | FCS |

| 8 bits | 2 bits | … | 24 bits | 1 bit | 7 bits | 24 bits |
|--------|--------|-----|---------|-------|--------|---------|
| Opcode (operation mode) | Pad Count (pad count) | … | **Dest QP (QPN)** | Acknowledgement request | Reserved | **PSN** |

FIG. 8

| 16 bits | ... | 16 bits | 32 bits | 16 bits | 16 bits | 16 bits | 16 bits |
|---------|-----|---------|---------|---------|---------|---------|---------|
| CommID | ... | True CommID | Communication protocol type | CommOp | CommOp | Global communication group size | Local communication group size |

FIG. 9

EP 4 648 378 A1

| 16 bits | 64 bits | ... | 8 bits | 8 bits |
|---------|---------|-----|--------|--------|
| CommID  | Tag     | ... | MsgID  | MsgLen |

FIG. 10

Switch weight ID table

| ID | Switch IP address | Weight |
|----|-------------------|--------|
| 0  | 10.0.0.1          | 3      |
| 1  | 10.0.0.2          | 2      |
| 2  | 10.0.0.3          | 1      |

Weighted extension →

Weighted routing table

| ID | Switch IP address |
|----|-------------------|
| 0  | 10.0.0.1          |
| 1  | 10.0.0.1          |
| 2  | 10.0.0.1          |
| 3  | 10.0.0.2          |
| 4  | 10.0.0.2          |
| 5  | 10.0.0.3          |

FIG. 11

Weighted routing table

| ID | Switch IP address |
|----|-------------------|
| 0  | 10.0.0.1          |
| 1  | 10.0.0.1          |
| 2  | 10.0.0.1          |
| 3  | 10.0.0.2          |
| 4  | 10.0.0.2          |
| 5  | 10.0.0.3          |

→

Weighted and smooth routing table

| ID | Switch IP address |
|----|-------------------|
| 0  | 10.0.0.1          |
| 1  | 10.0.0.2          |
| 2  | 10.0.0.1          |
| 3  | 10.0.0.3          |
| 4  | 10.0.0.2          |
| 5  | 10.0.0.1          |

FIG. 12

Create an empty weighted and smooth routing table

↓

Initial ID of an index of the weighted and smooth routing table = 0

↓

Copy a switch weight ID table, to generate a shadow table

↓

Count a sum of weights in the switch weight ID table, and record the sum as Sum

↓

Select a switch k with a largest weight from the shadow table, and insert k into <ID, IP address of the switch k> in the weighted and smooth routing table

↓

Update the weight of the switch k in the shadow table: Weight–Sum

↓

Determine whether weights of switches in the shadow table are currently all 0

No → Update the weights of all the switches in the shadow table: a weight of a switch i + an original weight of the switch i

↑

Update an index value in the weighted routing table: ID=ID+1

Yes ↓

End

FIG. 13

RoCEv2 packet

Control-plane
in-network
computing
packet

Update an
aggregation IP table

Aggregation
IP table

Is the RoCEv2 packet an uplink
in-network computing packet?

Aggregation
information table

Is the RoCEv2 packet an initial
packet of uplink in-network
computing packets?

Initial
packet

Update the
aggregation
information table

Non-initial packet

Aggregation computing
processing process

Packet header parsing
(a UDP header and an IP header)

Protocol version number and destination port number

Aggregation information table:
CommID and MsgID

Hash-based routing identifier
calculation process

Weighted and smooth
routing table

Weighting and
smoothing processing

Mod-N hash–based multipath
routing process

Switch weight,
IP address

Switch weight

Update a switch
weight ID table

Normal forwarding process

FIG. 14

EP 4 648 378 A1

36

FIG. 15

1601                    1605

Processor            Processor

Communication 1602
bus

1604        1606        1607

Communication    Output     Input device
interface        device

Memory                1603

FIG. 16

Forwarding node 1700

Receiving module        1701

Processing module        1702

Sending module        1703

FIG. 17

## INTERNATIONAL SEARCH REPORT

| International application No. |
| --- |
| **PCT/CN2024/071210** |

| A. | CLASSIFICATION OF SUBJECT MATTER |
| --- | --- |

H04L45/00(2022.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT: CNKI; ENTXTC; DWPI; IEEE: 转发, 交换机, 网内计算, 报文, 标识, 聚合, 哈希, 选路, 路径, forward, switch, intra-network computing, packet, message, identifier, ID, aggregation, hash, routing, path

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113783664 A (HUAWEI TECHNOLOGIES CO., LTD.) 10 December 2021 (2021-12-10) description, paragraphs [0005]-[0029] | 1-30 |
| A | CN 106559324 A (HUAWEI TECHNOLOGIES CO., LTD.) 05 April 2017 (2017-04-05) entire document | 1-30 |
| A | CN 114189474 A (HUAWEI TECHNOLOGIES CO., LTD.) 15 March 2022 (2022-03-15) entire document | 1-30 |
| A | WO 2022078415 A1 (HUAWEI TECHNOLOGIES CO., LTD.) 21 April 2022 (2022-04-21) entire document | 1-30 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 March 2024** | **20 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071210**

| Patent document cited in search report | | | Publication date (day/month/year) | Patent family member(s) | | | Publication date (day/month/year) |
|---|---|---|---|---|---|---|---|
| CN | 113783664 | A | 10 December 2021 | None | | | |
| CN | 106559324 | A | 05 April 2017 | US | 2017093718 | A1 | 30 March 2017 |
| | | | | EP | 3148137 | A1 | 29 March 2017 |
| CN | 114189474 | A | 15 March 2022 | WO | 2022052882 | A1 | 17 March 2022 |
| WO | 2022078415 | A1 | 21 April 2022 | CN | 114374634 | A | 19 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310101548